(19) **Europäisches Patentamt**
**European Patent Office**
**Office européen des brevets**

(11) **EP 2 672 773 A1**

(12) **EUROPEAN PATENT APPLICATION**

(43) Date of publication:
**11.12.2013 Bulletin 2013/50**

(51) Int Cl.:
**H04W 72/04** (2009.01)

(21) Application number: **12305658.2**

(22) Date of filing: **08.06.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Alcatel Lucent**
**75007 Paris (FR)**

(72) Inventor: **Chen, Chung Shue**
**Hong Kong (CN)**

(74) Representative: **2SPL Patentanwälte**
**Würmtalstrasse 119**
**81375 München (DE)**

Remarks:
Amended claims in accordance with Rule 137(2) EPC.

(54) **Apparatus and method for a wireless communication system**

(57) Embodiments relate to self-optimization for a wireless communication system. The wireless communication system comprises a plurality of base stations having associated thereto a plurality of users. The wireless communication system uses a plurality of physical radio resource blocks for a communication between the plurality of base stations and the plurality of users. One aspect of the self-optimization is to assign at least one physical radio resource block from the plurality of physical radio resource blocks to a user associated to a base station from the plurality of base stations, such that the at least one physical radio resource block assigned to the user maximizes a relation between a data throughput for said user on the assigned at least one physical radio resource block and an average data throughput of said user on the plurality of physical radio resource blocks. Thereby the at least one physical radio resource block may be assigned based on further information indicative of current transmit powers which the plurality of base stations have currently assigned to the plurality of physical radio resource blocks and based on further information indicative of a current association of the plurality of users to the plurality of base stations. That is to say, the given the knowledge of transmit power assignment and the user assignment, one may conduct optimization on the physical radio resource block assignment (scheduling). Likewise, given the knowledge of physical radio resource block assignment and the user assignment, one may conduct optimization on the transmit power assignment (power control). And, given the knowledge of physical radio resource block assignment (scheduling) and transmit power assignment (power control), one may conduct optimization on the user assignment in an iterative way.

Fig. 1

## Description

Embodiments of the present invention generally relate to wireless communications and, more particularly, to apparatuses and methods for self-organizing wireless or cellular communication systems.

<u>Background</u>

With the foreseen exponentially increasing number of users and traffic in 4th Generation (4G) wireless communication systems, such as Long-Term Evolution (LTE) or LTE-Advanced (LTE-A), existing deployment and practice of cellular radio networks that strongly rely on highly hierarchical architectures with centralized control and resource management become economically more and more unsustainable. Network self-organization and self-optimization are among the key targets of future cellular networks so as to relax the heavy demand of human efforts in the network planning and optimization tasks and to reduce the system's CApital and OPerational EXpenditure (CAPEX/OPEX).

Next-generation wireless communication networks are expected to provide a full coverage of broad-band wireless service and support fair and efficient resource utilization with a high degree of operation autonomy and system intelligence. In addition, energy efficiency has emerged as an important concern for future mobile or wireless communication networks. It is expected that energy consumption by the Information and Communications Technology (ICT) industry will be rising at 15 - 20% per year, and hence energy bills will become an important portion of Operational Expenditure (OPEX). To reduce the impacts on both revenue and environment caused by energy consumption, while providing satisfactory services to customers, mechanisms that jointly improve spectrum and energy efficiency for self-organizing networks are needed.

As mobile data traffic is increasing exponentially on a global scale, broadband wireless network with high spectral utilization efficiency is necessary to meet the future demands. Enhanced inter-cell interference management is a key to enable the deployment of LTE-Advanced and further future cellular networks, and to break through the existing capacity bottleneck for supporting cellular customers with reliable broadband service ubiquitously over large areas. Customer satisfaction will be the main driver behind; enhanced interference management strategies with fully flexible fairness configuration are highly favorable.

<u>Summary</u>

Embodiments of the present invention relate to self-organizing heterogeneous wireless communication systems and aim to achieve both spectrum and energy efficiency. It is proposed a generic model that jointly takes into account the key characteristics of today's wireless communication networks, such as LTE, for example, including e.g. the usage of Orthogonal Frequency Division Multiple Access (OFDMA) in the air interface, the nature of frequency-selective fading for each communication link, multi-cell multi-link interference occurred, and the different transmission (power) capabilities of different types of base stations, which may be macro cells or small cells, like pico or femto cells, for example.

Some embodiments also consider the cost of energy by taking into account the power consumption, including that for wireless transmission and that for the operation of base stations.

Based on a unified model, embodiments propose a distributed protocol or concept that may improve the spectrum efficiency of the wireless communication system, which can apply weighted proportional fairness among the data throughputs or channel capacities of clients or users, and reduce the cost of energy. Thereby proportional fair scheduling denotes a compromise-based scheduling algorithm. It is based upon maintaining a balance between two competing interests: Trying to maximize total wireless network throughput while at the same time allowing all users at least a minimal level of service. This may be done by assigning each user a data rate or a scheduling priority weight (depending on the implementation) that is inversely proportional to its anticipated resource consumption.

Embodiments may comprise multiple components. First, each base station may make scheduling decisions, i.e. physical radio resource assignment decisions, for its associated users. This may also be referred to as the scheduling problem. Second, each base station may allocate certain transmit powers on different physical radio resources, such as frequency and/or time, for example, by considering the influence on the data throughputs of associated users, interference caused on others, and possibly the cost of energy. This may be referred to as the power control problem. The power control problem influences both the spectrum efficiency and the cost of transmission power. Third, each client/user may choose a suitable base station to be associated with. Base stations may also need to decide whether to be in active mode to serve clients, or to be in sleep mode to save energy. We denote both the clients' decisions on associated base stations and base stations' decisions on whether to be in active or sleep mode as client association problem, as these two components may be tightly related. Hence, the client association problem influences both spectrum efficiency and the total cost of operation power.

Note that embodiments aim to help a plurality of the users of a wireless communication system. Interference is a severe capacity limiting factor. The problem is addressed by optimizing Signal-to-Interference-plus-Noise Ratios (SINRs) and their resulting data rates and in multi-cell systems. In addition, the impact of user attachment/association is taken into account explicitly when conducting the network optimization. In the context of heterogeneous small cell networks with network topology randomness, one can see that optimizing frequency selective scheduling and power control independently is usually sub-optimal. A joint cross-layer optimization is thus required. Embodiments propose performing iterative procedures such that for example given the knowledge of Y (e.g. a solution to the power control problem) and Z (e.g. a solution to the client association problem), or X (e.g. a solution to the scheduling problem) and Z, or X and Y, one may conduct optimization on X, or Y, or Z, respectively, in an iterative way.

Embodiments propose an online scheduling policy for the first component X, i.e., the scheduling problem. Hence, according to a first aspect of the present invention it is provided an apparatus for a wireless communication system, wherein the wireless communication system comprises a plurality of base stations or cells having associated thereto a plurality of users, respectively. The wireless communication system employs a plurality of physical radio resources or physical radio resource blocks for a (uni- or bi-directional) communication between the plurality of base stations and the plurality of users. In some embodiments the wireless communication system may even use a frequency reuse factor of 1. Thereby the frequency reuse factor commonly denotes the rate at which the same frequency can be used in the network. Generally, it is $1/K$, where $K$ is the number of cells which cannot use the same frequencies for transmission. That is to say, the plurality of physical radio resource blocks may at least be partially overlapping among different cells, thus causing inter-cell interference. The apparatus comprises a processor (e.g. a scheduler) which is operable or configured, e.g. for a current transmission time interval (e.g. a slot or radio frame), to assign at least one physical radio resource block (e.g. time and/or frequency resource) from the plurality of physical radio resource blocks to a user associated to a base station from the plurality of base stations, such that the at least one physical radio resource block assigned to the user maximizes a relation between a current or instantaneous data throughput or channel capacity for said user on the at least one assigned physical radio resource block and an average data throughput or channel capacity of said user taken over all previously assigned physical radio resource blocks of said user. That is to say, in each transmission time interval, e.g. a radio frame, the base station may decide which user should be scheduled in each resource block in order to maximize the user's average throughput.

It may be shown that embodiments may achieve globally optimum performance with respect to maximizing the data throughput of all users of the system when the solutions to the other components Y and Z, i.e., the power control problem and the client association problem, are assumed to be fixed for the physical radio resource block assignment (scheduling). That is to say, in some embodiments the apparatus' processor for solving the scheduling problem, i.e. the scheduling processor circuit, may be operable to assign the at least one current physical radio resource block to the user based on available (power control) information indicative of current transmit powers which the system's plurality of base stations have currently or instantaneously assigned to the system's plurality of physical radio resource blocks and, based on available (client association) information indicative of a current or instantaneous association of the system's plurality of users (or mobile terminals) to the system's plurality of base stations. That is to say, the scheduling processor may determine the scheduling for the users associated with the base station given (previously determined) solutions to the aforementioned interrelated power control problem and the client association problem.

The scheduling processor may be operable to reassign the at least one physical radio resource block differently when an updated instantaneous mapping of transmit powers assigned to the plurality of physical radio resource blocks and/or an updated instantaneous association of the plurality of users to the plurality of base stations has changed, such than the a relation between the instantaneous data throughput and the average data throughput is not maximum anymore for the updated instantaneous mapping of transmit powers and the updated instantaneous association of the plurality of users. That is to say, the three components (scheduling, power control, and client association) are interrelated and mutually influence each other. When the scheduling is changed because of a new current transmit power association and/or a new current client association this will again affect the current transmit power association and/or the current client association, again affecting the scheduling, and so on.

Hence, embodiments also propose distributed strategies for the other interrelated components Y and Z, i.e., the power control problem and the client association problem. It is shown that each of them may achieve locally optimal performance under some mild approximation of the system. It may be shown that these strategies only require small computational and communicational overheads, and hence are easily implementable. Moreover, these strategies take the interactions of the different components X, Y, and Z into account. Thus, an integrated solution that applies all these strategies jointly considers all factors of heterogeneous wireless systems.

The wireless communication system may in general be any present or future wireless communication network. It may, for example, correspond to one of the wireless communication systems standardized by the 3rd Generation Partnership Project (3GPP), as the Global System for Mobile Communications (GSM), Enhanced Data rates for GSM Evolution (EDGE), GSM/EDGE Radio Access Network (GERAN), Universal Terrestrial Radio Access Network (UTRAN) or Evolved UTRAN (E-UTRAN), High Speed Packet Access (HSPA), Long Term Evolution (LTE) or LTE-Advanced (LTE-A), or wireless communication systems with different standards, e.g. Worldwide Interoperability for Microwave Access (WIMAX) IEEE 802.16 or Wireless Local Area Network (WLAN) IEEE 802.11, generally any system based on Time Division Multiple Access (TDMA), Frequency Division Multiple Access (FDMA), Orthogonal Frequency Division Multiple Access (OFDMA), Code Division Multiple Access (CDMA), etc. In the following the terms wireless communication system and cellular communication network may be used synonymously.

In embodiments, the wireless communication system may comprise mobile terminals and base stations serving different radio cells. Depending on the scenario, i.e. downlink (DL) or uplink (UL), either one may function as a transmitter or receiver, respectively. For downlink, a base station will take over transmitter functionalities while a user's mobile terminal takes the receiver part. In the uplink it is vice versa, i.e., a base station works as a receiver while a user's mobile terminal works as a transmitter. The mobile terminal may correspond to a smartphone, a cell phone, user equipment, a laptop, a notebook, a personal computer, a Personal Digital Assistant (PDA), a Universal Serial Bus (USB) - stick, a car, etc. Thereby a mobile terminal may be equipped with one or a plurality of co- or cross-polarized antennas forming an antenna array of correlated or uncorrelated antenna elements. The usage of multiple antennas (i.e. $\geq 2$ antennas) at the mobile terminal may lead to MIMO or SIMO (Single-Input Multiple-Output) channels from a serving base station to the mobile terminal. As mentioned before, a mobile terminal may also be referred to as User Equipment (UE) in line with the 3GPP terminology.

The apparatus for the wireless communication network may be regarded as a network apparatus, i.e., an apparatus installed on the network side. The apparatus may be a network entity which is coupled to one or more transmission points. In some embodiments, different transmission points may correspond to different antenna sites, such as different base station sites, for example. Hence, in some embodiments the apparatus may be a base station apparatus, coupled to or comprised by a base station. A base station can be located in the fixed or stationary part of the network or system. A base station may correspond to a remote radio head, a transmission point, an access point, a macro cell, a small cell, a micro cell, a femto cell, a metro cell etc. A base station can be a wireless interface of a wired network, which enables transmission of radio signals to a UE or mobile terminal. Such a radio signal may comply with radio signals as, for example, standardized by 3GPP or, generally, in line with one or more of the above listed systems. Thus, a base station may correspond to a NodeB, an eNodeB, a BTS, an access point, etc. Like a mobile terminal, also a base station may be equipped with one or a plurality of antennas (i.e. $\geq 2$ antennas), leading to MIMO communication channels between an associated mobile terminal and its serving base station. In the sequel the terms base station and cell may be used interchangeably.

The term physical radio resource or physical radio resource block may be understood as an element or a combination of elements of the group of a frequency resource (e.g. a bandwidth, a carrier, a sub-carrier), a time resource (e.g. a radio frame, a time slot, a symbol, a sub-frame, a Time Transmission Interval (TTI)), a code resource (e.g. a spreading code), an Analog Spectrum Modulation (ASM) symbol, a Digital Spectrum Modulation (DSM) symbol, a Frequency Shift Keying (FSK) symbol, a Phase Shift Keying (PSK) symbol, a Pulse Code Modulation (PCM) symbol, a Quaternary Amplitude Modulation (QAM) symbol, a Frequency Hopping Spectrum (FHSS) sequence, a Direct Sequence Spread Spectrum (DSSS) sequence, etc. A physical radio resource may thus correspond to one of or a combination of the group of time resources, frequency resources, or coding resources for transmission techniques. For example, a Data Radio Bearer (DRB) also comprises a combination of physical radio resources and, hence, may be regarded as a radio resource itself.

As has been mentioned before, according to embodiments, for each current transmission time interval (e.g. radio frame), a base station may also need to decide how much power it should allocate to each physical resource block, subject to a constraint on its power budget. This component has been referred to as the power control problem. For addressing said power control problem the apparatus' processor circuit (or a power control part thereof) may further be operable, after the physical radio resource blocks have been assigned to all users for the current transmission time interval, i.e. after having determined a solution to the scheduling problem by having assigned physical radio resource blocks to all users of the system for the current transmission time interval, to adjust the base station's transmit power assigned to the at least one physical radio resource block based on the determined scheduling information being indicative of the physical radio resource blocks currently assigned to the system's plurality of users during a transmission time interval and based on association information being indicative of a current association of the system's plurality of users to the system's plurality of base stations during the transmission time interval. That is to say, the processor may also be operable to determine transmit powers for the users associated with the base station given (previously determined) solutions to the scheduling problem (X) as well as the client association problem (Z).

Also, every user may need to choose an active base station to be associated with for the transmission time interval. We denote both the clients' decisions on associated base stations and base stations' decisions on whether to be in active or sleep mode as client association problem. For addressing said client association problem the apparatus' processor (or a client association part thereof) may further be operable, for each of the plurality of base stations or cells, to determine information on a potential data throughput or channel capacity for the user in case said user was associated with the respective base station based on (previously determined) scheduling information being indicative of physical radio resource blocks currently assigned to the plurality of users during the transmission time interval and based on (previously determined) information indicative of current transmit powers which the plurality of base stations have currently assigned to the plurality of physical radio resource blocks or users. That is to say, the processor may determine a (new) base station association for the user's mobile terminal given (previously determined) solutions to the scheduling problem and the power control problem. Further, the processor (or the client association part thereof) may be operable to associate the user to a base station such that the potential or predicted overall data throughput of said mobile terminal is maximized.

Having determined new solutions to the power control problem (Y) and the client association problem (Z), a new iteration of the user scheduling for the current or next transmission time interval may be entered to find an updated solution to the scheduling problem (X) for the current or next transmission time interval given the new solutions to the power control problem and the client association problem, and so on. Hence, as the three problems may be regarded as a highly interrelated process of finding an optimum or near optimum solution for the network self-organization and optimization. It may be regarded as an iterative process concatenating the three components in any arbitrary order, i.e.:

a) Determining/assigning at least one physical radio resource block from the plurality of physical radio resource blocks to a user associated to a base station, such that the at least one physical radio resource block assigned to the user maximizes a relation between an instantaneous data throughput for said user on the at least one assigned physical radio resource block and an average data throughput of said user on the plurality of physical radio resource blocks. Thereby, this determined new solution to the scheduling problem may be provided based on available information being indicative of current transmit powers that the plurality of base stations have currently assigned to the plurality of physical radio resource blocks or users (i.e. given a solution to the power control problem, Y) and based on available association information being indicative of a current association of the plurality of users to the plurality of base stations (i.e. given a solution to the client association problem, Z). For that purpose the base stations may exchange necessary information via an inter-base-station-interface, such as the X2-interface (for LTE), for example.

b) (Re-)Adjusting the base station's transmit power(s) assigned to the at least one determined/assigned physical radio resource block (i.e. providing a new solution to power control problem) based on available scheduling information from step a) being indicative of physical radio resource blocks assigned to the plurality of users for the current or a previous transmission time interval (i.e., given a (new) solution to the scheduling problem, X) and based on available association information being indicative of an association of the plurality of users to the plurality of base stations for the current or a previous transmission time interval (i.e. given a (new) solution to the client association problem, Z), and

c) for each of the plurality of base stations, determining information on a potential overall data throughput on the plurality of physical radio resource blocks for a user in case said user was associated with the respective base station, and associating said user to the base station maximizing the potential overall data throughput of said user. Thereby, this new solution to the client association problem may be provided based on scheduling information being indicative of physical radio resource blocks assigned to the plurality of users for the current or a previous transmission time interval (i.e., given a (new) solution to the scheduling problem, X) and based on available information being indicative of transmit powers that the plurality of base stations have assigned to the plurality of physical radio resource blocks for the current or a previous transmission time interval (i.e., given a (new) solution to the power control problem, Y).

Hence, some embodiments also provide a method for a wireless communication system, wherein the method comprises one or more of steps (a) to (c). Thereby, each of the steps (a) to (c) may be performed by network entities on the network side, such as base stations, for example. In some embodiments in particular step c) may also be partly or fully performed by a mobile terminal. Hence, according to one aspect it is also provided an apparatus for a mobile terminal of a wireless communication system, wherein the apparatus comprises a processor which is operable, for each of the plurality of base stations, to determine information on a potential (or estimated) data throughput s for the mobile terminal in case said mobile terminal was associated with the respective base station, and operable to associate the mobile terminal to a base station such that the potential data throughput of said mobile terminal is maximized.

Note that the plurality of base stations or cells may be neighboring or adjacent cells causing non-negligible interference to each other. Hence, the plurality of base stations or cells may be regarded as interfering cells in uplink and/or downlink.

Some embodiments comprise one or more programmable digital control circuit(s) installed within a network apparatus or a mobile terminal apparatus for performing one of the above methods or step thereof. Such a programmable digital control circuit, for example a Digital Signal Processor (DSP), a Field Programmable Gate Array (FPGA) or a general purpose processor with hardware accelerators, needs to be programmed accordingly. Hence, yet further embodiments also provide a computer program having a program code for performing embodiments of one of the above methods, when the computer program is executed on a programmable hardware device.

Embodiments may allow for improving a wireless system and also cell-edge user throughputs in wireless networks by a distributed cross-layer optimization that jointly takes into account a (frequency-time) resource block scheduling, transmit power control and client association, and their interplay to achieve enhanced Inter-Cell Interference Coordination (ICIC) and support any arbitrarily weighted proportional fairness criteria.

Embodiments have low system complexity and can be implemented in a fully distributed way with limited local information exchange. Embodiments may fit LTE/LTE-A like networks. Embodiments may outperform today's LTE default method and improve the system's spectral utilization efficiency and cell-edge user throughputs significantly.

Embodiments may improve the system throughput by more than 150% and increase the proportion of clients in the system that have throughputs at least 3 Mbps from 15% to more than 64%, respectively. The resulting protocol only requires limited local information exchange and can be implemented in a fully distributed way for large networks. It has a low system complexity and is flexible to support any proportional fairness. It optimizes the resource block scheduling in both the frequency and time domain and jointly with transmission power and client association considerations.

Brief description of the Figures

Some embodiments of apparatuses and/or methods will be described in the following by way of example only, and with reference to the accompanying figures, in which

Fig. 1      illustrates an embodiment of an apparatus for a wireless communication system;

Fig. 2a     illustrates an algorithm for an approximate estimator;

Fig. 2b     illustrates an algorithm for wakeup estimator;

Fig. 3      shows a performance comparison of embodiments of the present invention and conventional scheduling concepts;

Fig. 4      shows a performance comparison of embodiments of the present invention and conventional power control concepts;

Fig. 5      shows a performance of a wireless communication system employing embodiments under various energy prices;

Fig. 6      shows a power consumption of a wireless communication system employing embodiments under various energy prices;

Fig. 7      illustrates a simulation topology;

Fig. 8      shows a performance comparison of a wireless communication system employing embodiments with a conventional system under various energy prices;

Fig. 9      shows a data throughput comparison of a wireless communication system employing embodiments with a conventional system under various energy prices; and

Fig. 10     shows an energy efficiency comparison of a wireless communication system employing embodiments with a conventional system under various energy prices.

Description of Embodiments

Various example embodiments will now be described more fully with reference to the accompanying drawings in which some example embodiments are illustrated. In the figures, the thicknesses of lines, layers and/or regions may be exaggerated for clarity.

Accordingly, while example embodiments are capable of various modifications and alternative forms, embodiments thereof are shown by way of example in the figures and will herein be described in detail. It should be understood, however, that there is no intent to limit example embodiments to the particular forms disclosed, but on the contrary, example embodiments are to cover all modifications, equivalents, and alternatives falling within the scope of the invention. Like numbers refer to like or similar elements throughout the description of the figures.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (*e.g.*, "between" versus "directly between," "adjacent" versus "directly adjacent," etc.).

The terminology used herein is for the purpose of describing particular embodiments only and is not intended to be limiting of example embodiments. As used herein, the singular forms "a," "an" and "the" are intended to include the plural forms as well, unless the context clearly indicates otherwise. It will be further understood that the terms "comprises," "comprising," "includes" and/or "including," when used herein, specify the presence of stated features, integers, steps, operations, elements and/or components, but do not preclude the presence or addition of one or more other features, integers, steps, operations, elements, components and/or groups thereof.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

In some embodiments the wireless communication system may be a reuse-1 radio system with several (interfering) base stations and clients/users that operate and may use LTE OFDMA, for example. The base stations can be of different types, including macro, micro, pico, and femto base stations. Exemplarily, LTE divides its operating frequency bandwidth into subcarriers, and time into frames, which are further divided into 20 time slots. The bandwidth of a subcarrier may be 15 kHz while the duration of a time frame may be 10 ms. Hence, some embodiments consider LTE Frequency Division Duplex (FDD), downlink transmission, and radio resource scheduling. For example, in LTE, a Physical Resource Block (PRB) comprises 12 consecutive subcarriers and one time slot of duration 0.5 ms. Under the OFDMA, each user may be allocated any number of resource blocks. However, for each base station, a resource block may not be allocated to more than one user. LTE can thus achieve both Time-Division Multiplexing (TDM) and Frequency-Division Multiplexing (FDM).

It is hereby defined M to be the set of base stations, I to be the set of clients, and $Z = F \times Q$ to be set of resource blocks, where each $f \in F$ represents a collection of 12 consecutive subcarriers and each $q \in Q$ represents a time slot. In the sequel, we use both $z \in Z$ and $(f, q)$ to denote a resource block for the notational convenience. Note that here we consider an exemplary reuse-1 system. However, the result could be extended to other systems as well.

It is considered the energy consumptions of base stations by breaking them into two categories: operation power and transmission power. When a base station has no clients to serve, the base station can be turned into sleep mode to save power. On the other hand, when the base station has some clients associated to it, it may need to remain in active mode. In addition to transmission power, a base station in active mode also consumes more power for computation, cooling, etc, than one in sleep mode. The sum of energy consumption other than transmission power is referred to as operation power. $C_m$ is denoted as the difference of operation powers consumed when base station $m \in M$ is in active mode and when it is in sleep mode.

$P_{m,z}$ denotes the amount of transmission or transmit power that a base station $m \in M$ assigns on resource block $z$. If base station $m$ does not operate in or on physical resource block $z$, then $P_{m,z} = 0$. The time-average transmission power consumed by base station $m$ may then be expressed as $\sum_{z \in Z} P_{m,z}/|Q|$. Further, it is assumed that each base station m has a fixed power budget $W_m$ for every time instant, and it is required that $\sum_f P_m,(f,q) \leq W_m$, which may be referred to as the per base station transmit power constraint. We note that the values of $C_m$ and $W_m$ can be different from base station to base station, as different types of base stations may consume different amounts of operation powers and have different power budgets. For example, a macro base station may have a much larger $C_m$ and $W_m$ than a femto base station.

Propagation loss and path condition may be captured by the channel gain. Note that in each resource block, one can consider that the channel gain is usually frequency-flat over the subcarriers given that the channel coherence bandwidth is greater than 180 kHz. It may also be regarded as time invariant in each time slot given that the channel coherence time is greater than 0.5 ms. However, the channel gain of a user may change from one resource block to another in the frequency and time domain. Let $G_{i,m,z}$ be the channel gain between base station $m$ and client/user $i$ on resource block $z$. To be more specific, when the base station $m$ transmits with power $P_{m,z}$, the received power at client $i$ on resource block $z$ is $G_{i,m,z}P_{m,z}$. The received power, $G_{i,m,z}P_{m,z}$, of client $i$ is considered to be its received signal strength if base station $m$ is transmitting data to client $i$, and is considered to be interference, otherwise. Therefore, when base station $m$ is transmitting data to client $i$ on resource block $z$, the Signal-to-Interference-Plus-Noise Ratio (SINR) of client $i$ on $z$ is expressible as $$\mathrm{SINR}_{i,z} = \frac{G_{i,m,z}P_{m,z}}{N_{i,z} + \sum_{l \neq m} G_{i,l,z}P_{l,z}},$$ where $N_{i,z}$ is the (thermal or Additive White Gaussian Noise, AWGN) noise experienced by client $i$ on resource block z. The throughput of this transmission may then be described by the Shannon capacity as $B\log(1 + \text{SINR}_{i,z})$, where $B$ denotes the bandwidth of a physical resource block.

Each client $i$ is associated with one base station $m(i) \in M$. In each transmission time interval (e.g. a radio frame), base station $m$ schedules one client that is associated with base station $m$ in each of the (physical) resource blocks in the frame. Let $\varphi_{i,m,z}$ be the proportion of time or a frame that client $i$ is scheduled in resource block z by base station $m$. To simplify the problem formulation, it may be assumed that $G_{i,m,z}$ does not vary over time. It will also be discussed how to take channel time variation into account. The influence of channel fading will also be demonstrated by simulations. Consider that $G_{i,m,z}$ does not vary over the time, the overall data throughput of client $i$, which is the sum of its data throughput taken over all the physical resource blocks, may hence be written as:

$$r_i := \sum_{z \in \mathbb{Z}} \phi_{i,m(i),z} B \log\left(1 + \frac{G_{i,m,z} P_{m,z}}{N_{i,z} + \sum_{l \neq m} G_{i,l,z} P_{l,z}}\right). \tag{1}$$

Embodiments aim to jointly achieve both spectrum efficiency and energy efficiency by considering the tradeoff between them. For spectrum efficiency, we aim to achieve weighted proportional fairness among all the clients when the cost of total power consumption is fixed. Let $w_i$ be a priority weight of client i or user-dependent priority indicator, wherein $w_i$ is indicative of an importance of serving the user $i$. The weighted proportional fairness can be achieved by maximizing $\sum_{i \in I} \omega_i \log r_i$.

On the other hand, we also aim to minimize the cost of total power consumption. We denote by $\zeta_m$ as the price of energy for base station $m$. We may then formulate the problem of joint spectrum and energy efficiency as the following optimization problem:

$$\text{Max} \quad \sum_{i \in \mathbb{I}} w_i \log r_i - \sum_{m \in \mathbb{M}, z \in \mathbb{Z}} \zeta_m P_{m,z} / |\mathbb{Q}| - \sum_{m \in \mathbb{M}: \exists i \in \mathbb{I}} \text{ s.t. } {}_{m(i)=m} \zeta_m C_m \tag{2}$$

$$\text{s.t.} \quad \sum_{i:m(i)=m} \phi_{i,m(i),z} = 1, \quad \forall m \in \mathbb{M}, z \in \mathbb{Z}, \tag{3}$$

$$\sum_{f \in \mathbb{F}} P_{m,(f,q)} \leq W, \quad \forall m \in \mathbb{M}, q \in \mathbb{Q}, \tag{4}$$

$$m(i) \in \mathbb{M}, \quad \forall i \in \mathbb{I}, \tag{5}$$

$$P_{m,z} \geq 0, \phi_{i,m(i),z} \geq 0, \quad \forall i, m, z. \tag{6}$$

This formulation shows that there are several important components involved. In each radio frame, a base station needs to decide which client should be scheduled in each resource block. This essentially determines the values of $\omega_{i,m(i),z}$ so as to maximize $\sum_{i \in I} w_i \log r_i$ in order to achieve weighted proportional fairness. We call this component the Scheduling Problem (X). In each frame, a base station also needs to decide how much power it should allocate in each resource block, subject to the constraint on its power budget. This component is referred as the Power Control Problem (Y). The Power Control Problem influences both the spectrum efficiency, $\sum_{i \in I} w_i \log r_i$, and the cost of transmission power, $\sum_{m \in M, z \in Z} \zeta_m P_{m,z}$. Besides, every client needs to choose an active base station to be associated with. Base stations also need to decide whether to be in active mode to serve clients, or to be in sleep mode to save energy. We denote both the clients' decisions on associated base stations and base stations' decisions on whether to be in active or sleep mode as the Client Association Problem (Z), as these two components are tightly related. Hence, the Client Association Problem influences both spectrum efficiency and the total cost of operation power, $\sum_{m \in M:\exists i \in I}$ s.t. $m(i) = m \zeta_m C_m$.

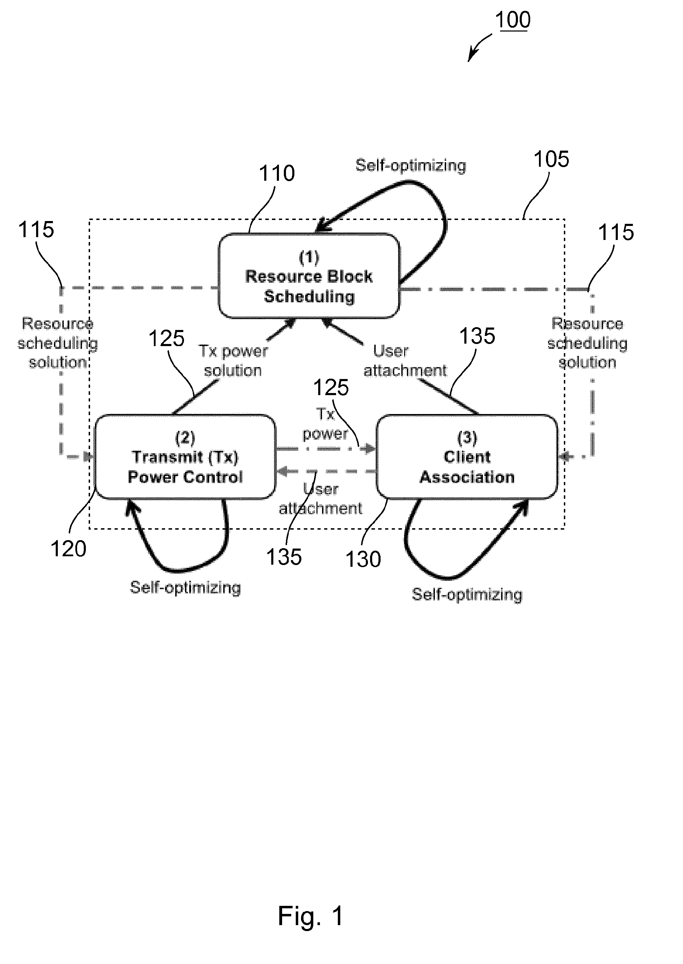

A schematic of the system model and procedure is depicted in Fig. 1, which illustrates an embodiment of the present invention.

It is shown an apparatus 100 for a wireless communication system. The wireless communication system comprises a plurality of (interfering) base stations M having associated thereto a plurality of users I. The wireless communication system uses a plurality of physical radio resource blocks Z for a communication between the plurality of base stations M and the plurality of users I. The apparatus 100 comprises a processor 105 comprising a scheduling circuit 110 which is operable to assign at least one physical radio resource block $z$ from the plurality of physical radio resource blocks Z to a user $i$ associated to a base station $m$ from the plurality M of base stations, such that the at least one physical radio resource block $z$ assigned to the user $i$ maximizes a relation between an instantaneous data throughput (or channel capacity) for said user $i$ on the assigned at least one physical radio resource block z for a current or upcoming time interval and an average data throughput (or channel capacity) of said user on the plurality Z of physical radio resource blocks.

Given a present solution/setting of transmit power (i.e. the Power Control Problem, Y) and client association (i.e. the Client Association Problem, Z), the scheduling circuit 110 may conduct physical resource block scheduling self-optimization in each base station $m \in M$ for maximizing the network throughput with weighted proportional fairness, with respect to its experienced signal and interference levels. That is to say, the scheduling processor 110 may be operable to assign the at least one physical radio resource block $z$ based on information 125 indicative of current transmit powers $P_{m,z}$ which the plurality M of base stations have currently assigned to the plurality Z of physical radio resource blocks and based on information 135 indicative of a current association of the plurality I of users to the plurality M of base stations.

Similarly, given the present outcomes 115 and 135 of the scheduling processor 110 and a client association processor 130, a transmit power control processor 120 of the processor 105 may self-optimize the transmit power control so as to enhance the network throughput performance. Hence, the transmit power control processor 120 may be operable, after physical radio resource blocks of Z have been assigned to all users of I associated to the plurality M of base stations, to (re-)adjust the base station's transmit power for the assigned at least one physical radio resource block $z$ for user $i$ based on scheduling information 115 (e.g. $\varphi_{i,m,z}$, previously determined by scheduling processor 110) being indicative of physical radio resource blocks assigned to the plurality of users during a transmission time interval and based on association information (previously determined by client association processor 130) being indicative of an association of the plurality I of users or clients to the plurality M of base stations during the transmission time interval, e.g. radio frame.

Similarly, given the resource scheduling solution 115 of scheduling processor 110 and the transmit power solution 125 of transmit power control processor 120, one can determine the client association so as to maximize user throughputs which are given by the signal to interference plus noise ratios. For this purpose the client association processor part 130 may be operable, for the plurality M of base stations, to determine information on a potential data throughput for a user $i$ in case said user $i$ was associated with the respective base station, and be operable to associate the user $i$ to a base station $m$ such that the data throughput of said user $i$ is maximized. This corresponds to a selfish association strategy for each user or client $i$. Note that the client association processor 130 may be comprised by an entity on the network side, e.g. a base station or another controller, as well as by a mobile terminal of the network. Also, the client association processor 130 may be distributed among a mobile terminal of user $i$ and one or a plurality of base stations.

After having modified the transmit power association 125 and the client association 135, the scheduling may be adapted to the modifications in order to reach the global optimum with respect to network throughput. For this purpose the processor 110 may be operable to reassign the at least one physical radio resource block when an instantaneous mapping of transmit powers assigned to the plurality of physical radio resource blocks and/or an instantaneous association of the plurality of users to the plurality of base stations has changed such than the a relation between the instantaneous data throughput and the average data throughput is not maximum anymore for the instantaneous mapping of transmit powers and the instantaneous association of the plurality of users. The assignment of the at least one physical radio resource block will be changed such that the relation between the instantaneous data throughput and the average data throughput gets maximal again, based on the new mapping of transmit powers and the new user association. The resulting modified scheduling 115 will then, in return, also influence transmit power association and the client association, and so on.

Please note that the functional blocks of Fig. 1 may also be understood of steps of a corresponding method. Hence, embodiments also refer to a method comprising one or more of the steps described by the functional blocks 110, 120, and 130 of Fig. 1.

Embodiments hence propose a distributed protocol implementable at each base station that jointly considers the above three components X, Y, and Z (i.e., resource block scheduling, transmit power, and client association) to take advantages of their interplay and inherently different time scale in optimizing the network throughput performance.

In the following, the Scheduling Problem is studied, given (previously determined) solutions to the Power Control Problem and the Client Association Problem, i.e., values of $P_{m,z}$ and $m(i)$. We thus define

$$H_{i,m(i),z} := B \log\left(1 + \frac{G_{i,m(i),z}P_{m(i),z}}{N_{i,z} + \sum_{l \neq m(i)} G_{i,l,z}P_{l,z}}\right), \qquad (7)$$

which may be regarded as an estimate of the data throughput or channel capacity of client $i$ on resource block $z$ when it is scheduled by base station $m(i)$, to simplify the notations. With $P_{m,z}$ and $m(i)$ fixed (i.e., given solutions to the Power Control Problem and the Client Association Problem), solving Eqs. (2)-(6) is equivalent to solving the following:

$$\text{Max} \quad \sum_{i \in \mathbb{I}} w_i \log r_i = \sum_{i \in \mathbb{I}} w_i \log\left(\sum_{z \in \mathbb{Z}} \phi_{i,m(i),z} H_{i,m(i),z}\right) \qquad (8)$$

$$\text{s.t.} \quad \sum_{i:m(i)=m} \phi_{i,m(i),z} = 1, \forall m \in \mathbb{M}, z \in \mathbb{Z}, \qquad (9)$$

$$\phi_{i,m(i),z} \geq 0, \forall i, z. \qquad (10)$$

One can see that the above optimization problem is in fact convex and hence can be solved by standard techniques of convex optimization. To further simplify the computation overhead, embodiments propose an online scheduling policy for the Scheduling Problem. Let $\varphi_{i,m(i),z}[k]$ be the proportion of time, e.g. radio frames, that base station $m$ ($i$) has scheduled client $i$ for resource block $z$ in the first $k$ - 1 frames. Similarly, let $r_i[k] = \sum_{z \in Z} \phi_{i,m(i),z}[k] H_{i,m(i),z}$ be the average throughput of client $i$ in the first $k$ frames. We then have

$$\phi_{i,m(i),z}[k+1] = \frac{k-1}{k}\phi_{i,m(i),z}[k] + \frac{1}{k},$$ if client $i$ is scheduled for radio resource $z$ in the ($k$ + 1)-th

frame, and $$\phi_{i,m(i),z}[k+1] = \frac{k-1}{k}\phi_{i,m(i),z}[k],$$ otherwise.

According to an online scheduling policy of an embodiment, the base station may schedule the client $i$ that maximizes the weighted relation $w_i H_{i,m(i),z}/r_i[k]$. It may solve the Scheduling Problem. Hence, the processor 110 may be operable, for a time interval ($k$+1), to assign the at least one physical radio resource block $z$ to the user $i$ associated to the base station $m(i)$ maximizing the expression $wi H_{i,m(i),z} / r_i[k]$, wherein $z$ denotes the at least one assigned physical radio resource block, $i$ denotes the user, $m(i)$ denotes the base station to which user $i$ is associated to, $w_i$ denotes a priority indicator being indicative of an importance of serving the user $i$, $H_{i,m(i),z}$ denotes the data throughput on the at least one assigned physical radio resource block $z$ for said user $i$ assigned to base station $m(i)$, and wherein $r_i[k]$ denotes the average data throughput of said user $i$ in $k$ time intervals before time interval ($k$+1). As has been explained above the processor 110 may be operable to determine the average data throughput $r_i[k]$ based on $r_i[k] = \sum_{z \in Z} \phi_{i,m(i),z}[k] H_{i,m(i),z}$, wherein $\varphi_{i,m(i),z}[k]$ denotes a proportion of time that a physical radio resource block $z$ has been assigned to the user $i$ associated to the base station $m(i)$ in the $k$ time intervals before time interval ($k$+1), and $H_{i,m(i),z}$ denotes a predicted data throughput or channel capacity on the at least one assigned physical radio resource block $z$ for said user $i$ assigned to base station $m(i)$. The processor 110 may be operable to determine the data throughput on the at least one assigned physical radio resource block $z$ for said user $i$ assigned to base station $m(i)$ based on Eq. (7), wherein $B$ denotes a bandwidth of a physical radio resource block, $G_{i,m(i),z}$ denotes a channel gain between the base station $m(i)$ and user $i$ on physical radio resource block $z$, $P_{m(i),z}$ denotes an amount of transmission power that the base station $m(i)$ assigns on physical radio resource block $z$, and $N_{i,z}$ denotes a (thermal) noise term experienced by user $i$ on physical radio resource block $z$. Further, the processor 110 may be operable to determine the proportion of time $\varphi_{i,m(i),z}[k+1]$ for the time interval $(k+1)$ based on $\phi_{i,m(i),z}\left[k+1\right] = \frac{k-1}{k}\phi_{i,m(i),z}\left[k\right] + \frac{1}{k}$, if client $i$ is scheduled for $z$ in the $(k+1)$-th time interval, and $\phi_{i,m(i),z}\left[k+1\right] = \frac{k-1}{k}\phi_{i,m(i),z}\left[k\right]$, otherwise. Using the above scheduling policy, the value of $\lim\inf_{k\to\infty}\sum_{i\in I} w_i \log r_i[k]$ may achieve the maximum of the optimization problem of Eqs. (8)-(10). Due to its length and not to obstruct the present specification the proof will be omitted here.

Note that in the previous discussions, it has been assumed that the channel gain, $G_{i,m,z}$, does not vary over time. In practice, however, channel gains may fluctuate due to fading. To take fading into account, we let $G_{i,m,z}$ be the instantaneous time-varying channel gain, and $\hat{H}_{i,m(i),z}$ be the instantaneous throughput that client $i$ can get from resource block $z$ if it is scheduled by base station $m(i)$. The scheduling policy of embodiments can then be easily modified such that the base station schedules the client with the largest $\omega_i H_{i,m(i),z}/r_i[k]$ on resource block $z$. It will be shown below that this modification can further improve performance.

Now, the interrelated Power Control Problem will be discussed in more detail, i.e., how the base stations may choose $P_{m,z}$ so as to solve Eqs. (2) - (6). Obviously, the base stations need to know the solution 115 of the Scheduling Problem $\{\varphi_{i,m,z}\}$, wherein $\{\varphi_{i,m,z}\}$ denotes scheduling information being indicative of physical radio resource blocks assigned to the plurality of users during a transmission time interval, and the values of channel gains $\{G_{i,m,z}\}$, in order to choose suitable transmit powers $P_{m,z}$. To reduce computation and communication overhead and maintain operational simplicity, the base stations may assume that for all clients $i$ associated with base station $m$, the perceived thermal noises are all $N_{m,z}$, the channel gains between them and base station m are all $G_{m,m,z}$, and the channel gains between them and base station $l$ $(\neq m)$ are all $G_{m,l,z}$ on resource block $z$. In practice, $N_{m,z}$ and $G_{m,m,z}$ can be set to be the average value of the noise powers and the average value of the channel gains between $m$ and its associated clients/users, respectively, and $G_{m,l,z}$ can be set to be the channel gain between base station $m$ and base station $l$ on resource block $z$. Under this assumption, one can see that the optimal solution to the Scheduling Problem of Eqs. (8)-(10) may be given by: $\phi_{i,m(i),z} = \dfrac{w_i}{\sum_{j:m(j)=m(i)} w_j}$. That is to say, the proportion of time $\varphi_{i,m(i),z}$ that client $i$ associated to base station $m(i)$ is scheduled on physical radio resource block $z$ may only be dependent on the priority weights of the users $i$ and $j \neq i$ associated to the same base station $m(i)$.

Let $w^m := \sum_{i:m(i)=m} w_i$ be the sum weight of the clients that are associated with base station m. Under a fixed solution 135 to the Client Association Problem and the above approximation 125 to the Scheduling Problem, Eqs. (2) - (6) may be rewritten as:

$$\text{Max} \sum_{m\in M} w^m \log \sum_{z\in Z} B \log\left(1 + \frac{G_{m,m,z}P_{m,z}}{N_{m,z} + \sum_{l\neq m} G_{m,l,z}P_{l,z}}\right) - \sum_{m\in M, z\in Z} \zeta_m P_{m,z}/|Q| \qquad (11)$$

$$\text{s.t.} \sum_{f\in F} P_{m,(f,q)} \leq W, \forall m \in M, q \in Q, \qquad (12)$$

$$P_{m,z} \geq 0, \forall i, m, z. \qquad (13)$$

Hence, the power control processor circuit 120 may be operable, based on known priority weights $w(i)$ of users associated with the base station $m$ and based on a known association of the plurality I of users to the plurality M of base stations, to determine a transmit power for the users associated to the base station based on Max

$$\sum_m w^m \log \sum_z B \log\left(1 + \frac{G_{m,m,z}P_{m,z}}{N_{m,z}+\sum_{l\neq m}G_{m,l,z}P_{l,z}}\right)$$, wherein $w^m := \sum_{i:m(i)}=m\, w_i$ denotes a sum priority weight of the users associated to the base station $m \in$ M, $B$ denotes a bandwidth of a physical radio resource block, $G_{m,m,z}$ denotes a channel gain for physical radio resource block $z$ between a user associated to the base station $m$ and said base station, $G_{m,l,z}$ denotes a channel gain for physical radio resource block $z$ between a base station $l \neq m$ and base station $m$, $P_{m,z}$ denotes a transmission power $P_{m,z}$ that the base station $m$ assigned to the physical radio resource block $z$, and wherein $N_{m,z}$ denotes a noise value for all users associated with base station $m$ on physical radio resource block $z$.

This problem is non-convex and it may be infeasible to find a global optimal solution thereto. Instead, embodiments propose a distributed heuristic that converges to a local optimum. Embodiments may apply a gradient method for the Power Control Problem as follows. Let $P$ be the vector consisting of $\{P_{m,z}\}$, $\mathrm{SINIZ}_{m,z}(P)$ :

$$= \frac{G_{m,m,z}P_{m,z}}{N_{m,z}+\sum_{l\neq m}G_{m,l,z}P_{l,z}}$$, $U(P) := \sum_{m\in M} w^m \log[\sum_{z\in Z} B \log(1 + \mathrm{SINR}_{m,z}(P))] \sum_{m\in M,z\in Z} \zeta_m P_{m,z}/|Q|$. We have:

$$\frac{\partial U(P)}{\partial P_{m,z}} = \frac{w^m}{\sum_{y\in Z}\log(1+\mathrm{SINR}_{m,y}(P))} \times \frac{G_{m,m,z}}{N_{m,z}+\sum_l G_{m,l,z}P_{l,z}}$$
$$+ \sum_{o\neq m}\frac{w^o}{\sum_{y\in Z}\log(1+\mathrm{SINR}_{o,y}(P))} \times \left[\frac{G_{o,m,z}}{N_{o,z}+\sum_l G_{o,l,z}P_{l,z}} - \frac{G_{o,m,z}}{N_{o,z}+\sum_{l\neq o}G_{o,l,z}P_{l,z}}\right]$$
$$-\zeta_m/|\mathbb{Q}|.$$

Each base station may update its transmit power periodically. When base station $m$ updates its power, it may set its transmit power on resource block $(f, q)$ to be:

$$\begin{cases} [P_{m,(f,q)} + \alpha\frac{\partial U(P)}{\partial P_{m,(f,q)}}]^+, & \text{if } \sum_e[P_{m,(e,q)} + \alpha\frac{\partial U(P)}{\partial P_{m,(e,q)}}]^+ \leq W_m, \\ \\ W\frac{[P_{m,(f,q)}+\alpha\frac{\partial U(P)}{\partial P_{m,(f,q)}}]^+}{\sum_e[P_{m,(e,q)}+\alpha\frac{\partial U(P)}{\partial P_{m,(e,q)}}]^+}, & \text{otherwise}, \end{cases} \qquad (14)$$

The power control processor circuit 120 may hence be operable or configured to update the $m$-th base station's transmit power for a physical radio resource block $z$ based on $\frac{\partial U(P)}{\partial P_{m,z}}$, wherein U(P):= $\sum_{m\in M} w_m \log[\sum_{z\in Z} B \log(1 + \mathrm{SINR}_{m,z}(P))]$, wherein $w^m := \sum_{i:m(i)=m} w_i$ denotes a sum priority weight of the users associated to the base station $m$, $B$ denotes a bandwidth of a physical radio resource block $z$, wherein

$$\mathrm{SINR}_{m,z}(P) := \frac{G_{m,m,z}P_{m,z}}{N_{m,z}+\sum_{l\neq m}G_{m,l,z}P_{l,z}}$$, wherein $G_{m,m,z}$ denotes a channel gain for physical radio resource block $z$ between a user associated to base station $m$ and said base station, $G_{m,l,z}$ denotes a channel gain for physical radio resource block $z$ between a base station $l \neq m$ and base station $m$ on physical radio resource block $z$, $P_{m,z}$ denotes a transmission power $P_{m,z}$ that the base station $m$ assigns to a physical radio resource block $z$, $P_{m,z}$ denotes a transmission power $P_{m,z}$ that a base station $l \neq m$ assigns to a physical radio resource block $z$, and wherein $N_{m,z}$ denotes a noise value for all users associated with base station $m$ on physical radio resource block $z$.

Also, the power control processor circuit 120 may be operable to update the m-th base station's transmit power for radio resource block $z = \{f,q\}$ based on Eq. (14), wherein $x^+ := \max\{x,0\}$, and $\alpha$ is a small constant. Base station m may need to compute the partial deviation $\partial U(P)/\partial P_{m,z}$ to update its power on each resource block. The computation of $\partial U(P)/\partial P_{m,z}$ can be further simplified by setting $G_{o,m,z} = 0$ for all o such that $G_{o,m,z}$ is small and has little influence on the value of $\partial U(P)/\partial P_{m,z}$. Thus, to compute $\partial U(P)/\partial P_{m,z}$, base station m may exchange information with base station o that is physically close to it (e.g. an interfering base station) so as to know:

- a sum weight of clients associated with base station o, i.e., $w^o$,
- a channel gain $G_{o,m,z}$ from base station m to base station o,
- a sum of interference and noise $N_{o,z} + \sum_{l \neq o} G_{o,l,z} P_{l,z}$ at o,
- a received signal strength $G_{o,o,z} P_{o,z}$ at base station o, and
- an average total throughput $\sum_{y \in Z} \log(1+\text{SINR}_{o,y}(P))$ in the downlink of base station o,

for all o that $G_{o,m,z}$ is large, i.e. above a predefined gain threshold. That is to say, in some embodiments the apparatus 100 may be associated to a first base station $m$ of the wireless communication system and comprise an interface for exchanging, with a second base station $o$, the respective sum priority weight, channel gain for physical radio resource block $z$ between the first and the second base station, the respective sum of interference plus noise, the respective received signal strength, and the respective average total data throughput. In LTE, for example, the above information may be obtained via periodic Channel Quality Indicator (CQI) and reference signal reports. Embodiments are easy to implement and only require limited information exchange between neighbor cells. It may be assumed that neighbor cell communication may take place between base stations and is supported by a wired backhaul network.

In the following, it will be discussed how embodiments may solve the interrelated Client Association Problem, i.e., how each client $i$ may choose an adequate base station $m(i)$. Embodiments propose a solution comprising two parts:

In a first part, each client $i$ may estimate its data throughput when it associates with each base station. The client $i$ may then selfishly choose the base station that maximizes its data throughput. In a second part, each base station may decides whether to be in active mode or in sleep mode by jointly considering the effects on spectrum efficiency and energy consumption.

It may be assumed that each client $i$ is selfish and would like to choose a base station $m$ that maximizes its own throughput when it is associated with base station $m$. This assumption may be made under two main reasons. First, this conforms to the selfish behaviors of clients. Second, in a densely populated network, the decision towards base station $m(i)$ by one client $i$ only has a limited and indirect impact on the overall performance of other clients.

We define $H_{i,m,z}$ as in Eq. (7), and $\phi_{i,m,z}$ be the proportion of frames that base station $m$ would schedule user $i$ if user $i$ was associated with base station $m$. The user $i$ may then select the base station $m$ that maximizes $\hat{r}_{i,m} := \sum_{z \in Z} \phi_{i,m,z} H_{i,m,z}$. That is to say, the client association processor 130 may be adapted, for each of the plurality of base stations, to determine information (e.g. $\phi_{i,m,z}$, and $H_{i,m,z}$) indicative of a data throughput for a user $i$ in case said user $i$ was associated with the respective base station $m$, and be adapted to associate the user $i$ to a base station $m$ such that the data throughput $\hat{r}_{i,m}$ of said user $i$ is maximized. In some embodiments processor 130 may be comprised by a mobile terminal of user/client $i$. In practice, client $i$ can only be associated with base stations that are in active mode and whose channel capacity $H_{i,m,z}$ is above some threshold for some $z \in Z$. To compute $\hat{r}_{i,m}$ for all such base stations, client $i$ may need to know the respective values of $H_{i,m,z}$ and $\phi_{i,m,z}$. Client $i$ may assume that the transmission powers used by base stations are not influenced much by its choice, which is true in a dense network. Thus, client $i$ may only need to know its perceived SINR with each base station on each resource block to compute $H_{i,m,z}$. That is to say, the processor 130 may be operable or adapted to determine, for a potential association of the user $i$ to each of the plurality of base stations, an estimate for a Signal-to-Interference-plus-Noise Ratio (SINR) experienced by said user $i$ on each physical radio resource block, to obtain an estimate for a data throughput $H_{i,m,z}$ corresponding to each physical radio resource block $z$ for said user $i$ assigned to the respective base station $m$. It remains for the client $i$ to compute the value of $\phi_{i,m,z}$. Embodiments propose two different approaches to compute this value.

In a first approach, which may be referred to as Exact Simulator (ES), client $i$ may first obtain the values of $w_j$ and $R_{j,m,z}$ for all other clients $j$ that are associated with base station $m$. Client $i$ can then simulate the scheduling decisions of base station $m$ by running the online scheduling method of processor part 110, and may obtain the value of $\hat{\phi}_{i,m,z}$ on each resource block $z$. Hence, the processor 130 may be operable to access the processor part 110 for simulating, for a potential association of the mobile terminal to each of the plurality of base stations, an assignment of at least one physical radio resource block to the user $i$, to obtain a proportion of time $\phi_{i,m,z}$ that the at least one physical radio resource block $z$ is assigned to the user $i$. While this approach may offer an accurate estimation on $\hat{\phi}_{i,m,z}$ and $\hat{r}_{i,m}$, it requires quite high computation and communication overhead.

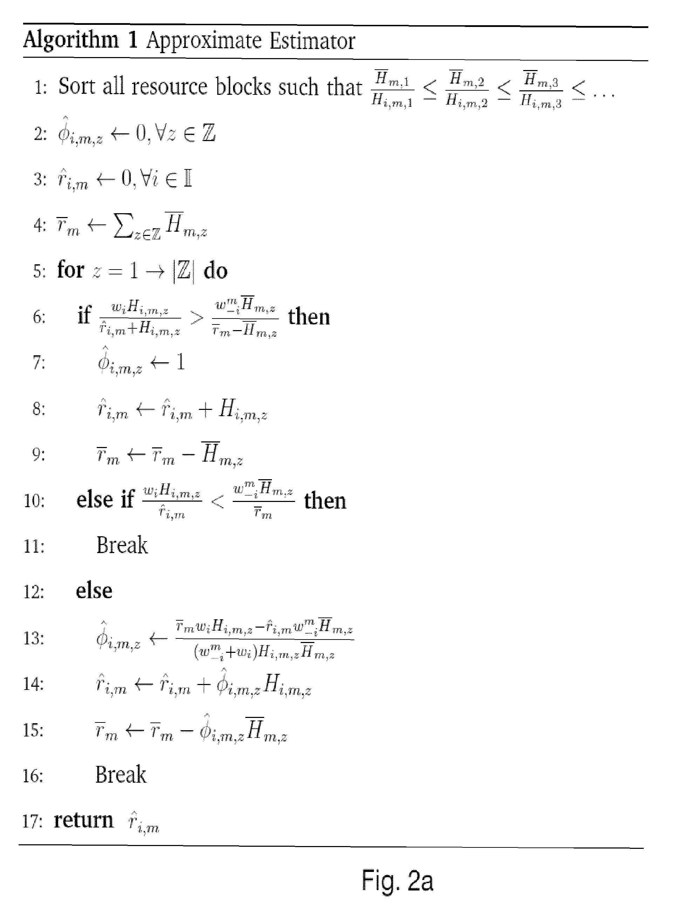

In a second approach, which may be referred to as Approximate Estimator (AE), client $i$ may only obtain the values of $w^m_{-i} := \sum_{j:j \neq i, m(j)=m} w_j$, and $\overline{H}_{m,z} := \sum_{j:m(j)=m} \phi_{j,m,z} H_{j,m,z}$, which is the average data throughput of base station $m$ on resource block $z$. Client $i$ may assume that, when another client $j$ is scheduled by base station $m$ on resource block $z$, its throughput on $z$ equals the average throughput $\overline{H}_{m,z}$. according to an embodiment, the processor 130 associated to client $i$ may then estimates $r_i$ by Algorithm 1 illustrated by the pseudo code of Fig. 2a. The complexity of Algorithm 1 is $O(|Z|)$, and therefore this approach may be regarded as more efficient than the Exact Simulator described above. Moreover, the following theorem suggests that the Approximate Simulator provides reasonably good estimates on the data throughput of client $i$ if it is associated with base station $m$: If for each client $j$ other than $i$ that is associated with base station $m$, $H_{j,m,z} = \overline{H}_{m,z}$, then, under embodiments of the online scheduling policy of processor 110, the data throughput of client $i$ equals the value of $\hat{r}_{i,m}$ obtained by Algorithm 1 when it is also associated with base station $m$. Hence, the processor 130 may be operable to associate client $i$ with base station $m$, if for each other client $j \neq i$ that is associated with $m$, $H_{j,m,z} = \overline{H}_{m,z}$.

It has been shown that the online scheduling method of processor 110 may achieve the optimum solution to the Scheduling Problem. It is claimed that, by setting $\varphi_{i,m,z}$ as that derived in Algorithm 1 and

$$\phi_{j,m,z} = \frac{w_j}{\sum_{k \neq i, m(k)=m} w_k}\left(1 - \phi_{i,m,z}\right),$$

for all $j \neq i$, $m(j) = m$, the resulting $r_i$ and $\{r_j \mid j \neq i, m(j) = m\}$ may also achieve the optimum solution to the Scheduling Problem. It may be shown that $\{\phi_{j,m,z}|m(j) = m\}$ maximizes $\sum_{j:m(j)=m}$ log $r_j$ if and only if $\varphi_{i,m,z} \geq 0$, for all $j$, $z$, $\sum_j$ $\phi_{j,m,z} = 1$, for all $m$, $z$, and

$$\frac{\partial L}{\partial \phi_{j,m,z}} = \frac{w_j H_{j,m,z}}{r_j} = \max_{k:m(k)=m} \frac{w_k H_{k,m,z}}{r_k},$$

for all $j$, $z$ such that $\varphi_{j,m,z} > 0$. By our settings of $\varphi_{j,m,z}$, the first two conditions hold, and we only need to verify the last condition.

Sort all resource blocks such that $\frac{\overline{H}_{m,1}}{H_{i,m,1}} \leq \frac{\overline{H}_{m,2}}{H_{i,m,2}} \leq \frac{\overline{H}_{m,3}}{H_{i,m,3}} \leq \ldots$, we consider two possible cases: there exists some $z_0$ such that $0 < \varphi_{i,m,z_0} < 1$, and such $z_0$ does not exist, i.e., $\varphi_{i,m,z} \in \{0, 1\}$ for all $z$. In the first case, we have that $\varphi_{i,m,z} = 1$, for all $z < z_0$, and $\varphi_{i,m,z} = 0$, for all $z > z_0$. By setting

$$\phi_{j,m,z} = \frac{w_j}{\sum_{k \neq i, m(k)=m} w_k}\left(1 - \phi_{i,m,z}\right),$$

for all $j \neq i$, $m(j) = m$, we have

$$r_j = \frac{w_j}{\sum_{k:m(k)=m, k \neq i} w_k}\overline{r}_m = \frac{w_j}{w_{-i}^m}\overline{r}_m.$$

Let $r_i^*$ and $\overline{r}_m^*$ be the values of $r_i$ and $\overline{r}_m$ in the $z_0$-th iteration of the for loop in Algorithm 1. As $0 < \phi_{i,m,z_0} < 1$, lines 13-17 are executed in this iteration, and we have

$$r_i = r_i^* + \phi_{i,m,z_0} H_{i,m,z_0} \quad \text{and} \quad \overline{r}_m = \overline{r}_m^* - \phi_{i,m,z_0}\overline{H}_{m,z_0}.$$

Moreover, in line 13, the value of $\phi_{i,m,z_0}$ is chosen so that

$$\frac{w_i H_{i,m,z_0}}{r_i^* + \phi_{i,m,z_0} H_{i,m,z_0}} = \frac{w_{-i}^m \overline{H}_{m,z_0}}{\overline{r}_m^* - \phi_{i,m,z_0}\overline{H}_{m,z_0}}.$$

Therefore, $\frac{w_i H_{i,m,z_0}}{r_i} = \frac{w_{-i}^m \overline{H}_{m,z_0}}{\overline{r}_m} = \frac{w_j \overline{H}_{m,z_0}}{r_j}$, for all $j$ such that $m(j) = m$ and $j \neq i$. Thus, the last condition holds for resource block $z_0$. For any resource block $z < z_0$, $\frac{\overline{H}_{m,z}}{H_{i,m,z}} \leq \frac{\overline{H}_{m,z_0}}{H_{i,m,z_0}}.$ We then have

$$\left(\frac{w_i H_{i,m,z}}{r_i}\right)/\left(\frac{w_j \overline{H}_{m,z}}{r_j}\right) \geq \left(\frac{w_i H_{i,m,z_0}}{r_i}\right)/\left(\frac{w_j \overline{H}_{m,z_0}}{r_j}\right) = 1,$$

and

hence $\dfrac{w_i H_{i,m,z}}{r_i} \geq \dfrac{w_j \overline{H}_{m,z}}{r_j}$, for all j such that $m(j) = m$ and $j \neq i$. As we set $\varphi_{j,m,z} = 0$ for all $j \neq i$, the last condition holds for all $z < z_0$. Similarly, for any resource block $z > z_0$, $\dfrac{w_i H_{i,m,z}}{r_i} \leq \dfrac{w_j \overline{H}_{m,z}}{r_j}$, for all $j$ such that $m(j) = m$ and

$j \neq i$. As we set $\varphi_{j,m,z} = 0$, the last condition also holds for all $z > z_0$. In sum, the last condition holds for the case that there exists some $z_0$ such that $0 < \varphi_{i,m,z0} < 1$.

Next consider the case that $\varphi_{i,m,z} \in \{0, 1\}$ for all $z$. Let $z_1$ be the smallest integer so that $\phi_{i,m,z1} = 0$. In the $z_1$-th iteration of the FOR loop in Algorithm 1, steps 10-11 are executed, and we have

$\dfrac{w_i H_{i,m,z}}{r_i} < \dfrac{w^m_{-i} \overline{H}_{m,z}}{\bar{r}_m} = \dfrac{w_j \overline{H}_{m,z}}{r_j}$, for all $j$ such that $m(j) = m$ and $j \neq i$. The last condition then holds for

resource block $z_1$. A similar argument as in the previous paragraph shows that the last condition holds for all $z$.

After obtaining the value of $\hat{r}_{i,m}$, client $i$ may select $m(i) = \arg \max_m \hat{r}_{i,m}$ and associates with base station $m(i)$. Moreover, client $i$ may report the estimated rate with $m(i)$, $\hat{r}_{i,m(i)}$, and the second largest estimated rate among all base stations, $\max_{m \neq m(i)} \hat{r}_{i,m}$, to $m(i)$. We define $m^*(i) := \arg \max_{m \neq m(i)} \hat{r}_{i,m}$, and hence $\hat{r}_{i,m^*(i)} = \max_{m \neq m(i)} \hat{r}_{i,m}$. These values may be used for base stations to decide whether to switch to sleep mode, which is discussed in the following section.

In summary, when the Approximate Estimator is applied to processor 130, each base station $m$ only needs to periodically broadcast a total number of $|Z| + 1$ values, that is, the values of $w^m$, from which each client $i$ can compute

$w^m_{-i}$, and $\overline{H}_{m,z}$ for all $z \in Z$. On the other hand, when a client $i$ decides to be associated with a base station $m(i)$, it may only need to report two values: $\hat{r}_{i,m(i)}$ and $\hat{r}_{i,m^*(i)}$. Thus, the communication overhead for the Approximate Estimator is small.

It is now discussed how base stations may decide whether to be in active mode or in sleep mode. The method may comprise two parts: one for a base station in active mode to decide whether to switch to sleep mode, and one for a base station in sleep mode to decide whether to switch to active mode.

First, consider a base station $m_0$ that is in active mode. Given the solution 125 to the Power Control Problem, base station $m_0$ may aim to maximize $\Sigma_{i:m(i)=mn} w_i \log r_i - \zeta_{m_0} C_{m_0} 1\{m_0$ is in active mode$\}$, where $1\{\cdot\}$ denotes the indicator function. When $m_0$ is in active mode, it may estimate that $r_i = \hat{r}_{i,m(i)}$, which is the estimated throughput that client $i$ reports to base station $m_0$ as discussed in the previous section. Therefore, we have:

$$\sum_{i:m(i)=m_0} w_i \log r_i - \zeta_{m_0} C_{m_0} 1\{m_0 \text{ is in active mode}\} = \sum_{i:m(i)=m_0} w_i \log \hat{r}_{i,m(i)} - \zeta_{m_0} C_{m_o}. \quad (15)$$

On the other hand, when base station $m_0$ is in sleep mode, it may assume that its clients will be associated with the base station other than $m_0$ that provides the largest throughput, and the resulting throughput of client $i$ will be $\hat{r}_{i,m^*(i)}$. We then have:

$$\sum_{i:m(i)=m_0} w_i \log r_i - \zeta_{m_0} C_{m_o} 1\{m_0 \text{ is in active mode}\} = \sum_{i:m(i)=m_0} w_i \log \hat{r}_{i,m^*(i)}. \quad (16)$$

The base station $m_0$ may compare the values of Eqs. (15) and (16). If the latter is larger than the former, base station $m_0$ may switch to sleep mode.

Next, consider a base station $m_1$ that is in sleep mode. Base station $m_1$ may periodically wake up and broadcast beacon messages on all resource blocks, where it may use equal amounts of power on all resource blocks. Each client $i$ may then measure the SINR from $m_1$ on each resource block and obtain the values of $H_{i,m1,z}$ for all $z$. Each client $i$ may compute $\hat{r}_{i,m1} = \Sigma_{z \in Z} H_{i,m1,z}$, which is the estimated throughput of $i$ if $i$ is the only client associated with $m_1$. If $\hat{r}_{i,m1}$ is larger than $r_i$, the current throughput of client $i$, client $i$ may report the values of $w_i$, $\hat{r}_{i,m1}$, and $r_i$ to base station $m_1$.

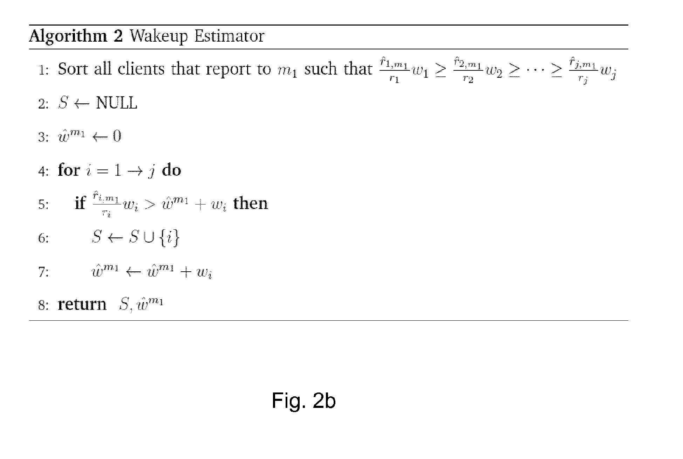

Base station $m_1$ may need to estimate the throughput of clients that will be associated with it when it switches to active mode. Note that the value of $\hat{r}_{i,m1}$ is not a good estimate of the throughput of $i$ when base station $m_1$ is in active mode and $i$ associates with base station $m_1$. Recall that $\hat{r}_{i,m1}$ is the estimated throughput of client $i$ when $i$ is the only client associated with base station $m_1$. When base station $m_1$ is in active mode, it is possible that $m_1$ will have more than one clients, and hence the throughput of user $i$ may be much less than $\hat{r}_{i,m1}$ when $i$ is associated with $m_1$. To better estimate clients' throughputs when base station $m_1$ is in active mode, $m_1$ may assume that frequency-selective fading is not significant, and the values of $H_{i,m1,z}$ are the same for all $z$ when $i$ is fixed. Under this assumption, embodiments of the online scheduling policy will result in $\phi_{i,m_1,z} = \frac{w_i}{w^{m_1}}$ for all clients that are associated with base station $m_1$ and $z \in Z$, where $w^{m1} = \Sigma_{i:m(i)=m1}\, w_i$. Base station $m_1$ may then run Algorithm 2 of Fig. 2b and estimate that the set S of clients that will be associated with base station $m_1$ when $m_1$ switches to active mode. Hence $w^{m1}$ may be estimated to be $\hat{w}^{m1}$, and each client $i$ in S may be estimated to have a throughput of $\hat{r}_{i,m_1}\phi_{i,m_1,z} = \hat{r}_{i,m_1}\frac{w_i}{w^{m_1}}$.

According to the intuitions of Algorithm 2 let $i^*$ be the largest value in S, and thus the value of $\hat{w}^{m1}$ is last updated in Line 7 of the $i^*$-th iteration in Algorithm 2. We then have $\frac{\hat{r}_{i^*,m_1}}{r_{i^*}}w_{i^*} > \hat{w}^{m_1} = w^{m_1}$. For each $i$ in S, we have $\frac{\hat{r}_{i,m_1}}{r_i}w_i \geq \frac{\hat{r}_{i^*,m_1}}{r_{i^*}}w_{i^*} > w^{m_1}$, and hence $\hat{r}_{i,m_1}\frac{w_i}{w^{m_1}} > r_i$, that is, client $i$ may be estimated to have higher throughput when it is associated with base station $m_i$. This justifies the estimation that client $i$ will leave its current base station to be associated with $m_1$. On the other hand, for each client $i'$ that is not in S, we have $\frac{\hat{r}_{i',m_1}}{r_{i'}}w_{i'} \leq w^{m_1}$ and $\hat{r}_{i',m_1}\frac{w_{i'}}{w^{m_1}} \leq r_{i'}$, justifying the estimation that $i'$ will stay with its current base station and not be associated with base station $m_1$. Therefore, Algorithm 2 may provide a reasonable estimation on the set of clients that will be associated with base station $m_1$ when $m_1$ switches to active mode. Moreover, the complexity of Algorithm 2 is only $O(j\log j)$, where $j$ is the number of clients that report to base station $m_1$.

Finally, base station $m_1$ may compare the value of $\sum_{i \in S} w_i \log(\hat{r}_{i,m_1}\frac{w_i}{w^{m_1}}) - \zeta_{m_1}C_{m_1}$ against the value of $\Sigma_{i \in S}\, w_i \log r_i$. If the former is larger, that is, $\sum_{i \in S} w_i[\log(\hat{r}_{i,m_1}\frac{w_i}{w^{m_1}}) - \log r_i] - \zeta_{m_1}C_{m_1} > 0$, base station $m_1$ may switch to active mode.

In the following, some simulation results will be presented. We first present simulation results on three small-scale systems. While these systems may be over-simplified, they provide insights on embodiments for the components discussed in this specification, namely, the Scheduling Problem, the Power Control Problem, and the Client Association Problem. We then present simulation results for a large-scale system.

We exemplarily consider a reuse-1 LTE-FDD system with a bandwidth of 10 MHz, which can accommodate 600 subcarriers and there are $600/12 \times 20 = 1000$ resource blocks. Channel gains are derived from the following equation:

$$PL(d) = 128.1 + 37.6\log_{10}(d) + X + Y, \qquad (17)$$

where PL($d$) is the channel gain in dB and $d$ is distance in km. $X$ and $Y$ represent shadowing and fast fading, respectively. $X$ is the log-normal shadowing with mean 0 and standard deviation 8 dB. Since $X$ is a slow fading, we consider that it is time invariant. However, it will vary in frequency, in every 180 kHz. On the other hand, $Y$ represents Ray-leigh fast fading with a Doppler of 5 Hz. It also varies in frequency. The thermal noise is randomly generated in $[3.5, 4.5] \times 10^{-15}$ W.

It has been shown that a present macro base station may consume 75W when it is in sleep mode, and 130W when it is in active mode. Therefore, we set the operation power of a macro base station to be 55W. It has also shown that the power budget of a macro base station is 20W. Similarly, we set the operation power and transmission power budget of a micro base station to be 17W and 6.3W, respectively.

The proposed online scheduling policy, power control, and Approximate Estimator have been implemented. Embodiments are compared against a Default mechanism which employs round-robin for the Scheduling Problem, uses the same amount of power on all resource blocks (i.e., no or very limited power control as in today's LTE downlink), and associates each client to the closest base station, respectively. We compare the performance of different mechanisms by their resulting values of Eq. (2), where the data throughput of a client, $r_i$, is measured in kbits/sec.

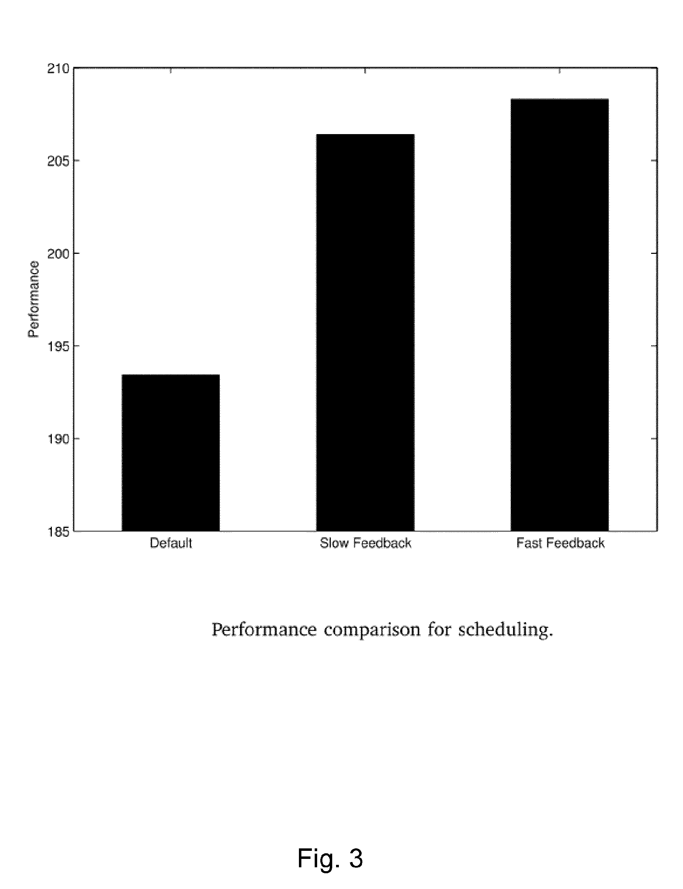

We first consider a system with one macro base station and 25 clients. Clients are uniformly placed as a $5 \times 5$ grid, where the distance between adjacent clients is 100 m. We compare the Default mechanism against embodiments of our scheduling policy (processor 110), where we consider both cases when the base station has instant knowledge of channel gains and where base stations only have knowledge of long-term average channel gains, denoted by Fast Feedback and Slow Feedback, respectively. We set the price of energy, $\zeta_m$, to be zero for this system, as we are only interested in the performance of scheduling policies. Fig. 3 shows the simulation results. It is observed that both Fast Feedback and Slow Feedback achieve much better performance than the Default mechanism, as they both use knowledge on channel gains for scheduling decisions. Fast Feedback has better performance than Slow Feedback since it takes effects of fast fading into account.

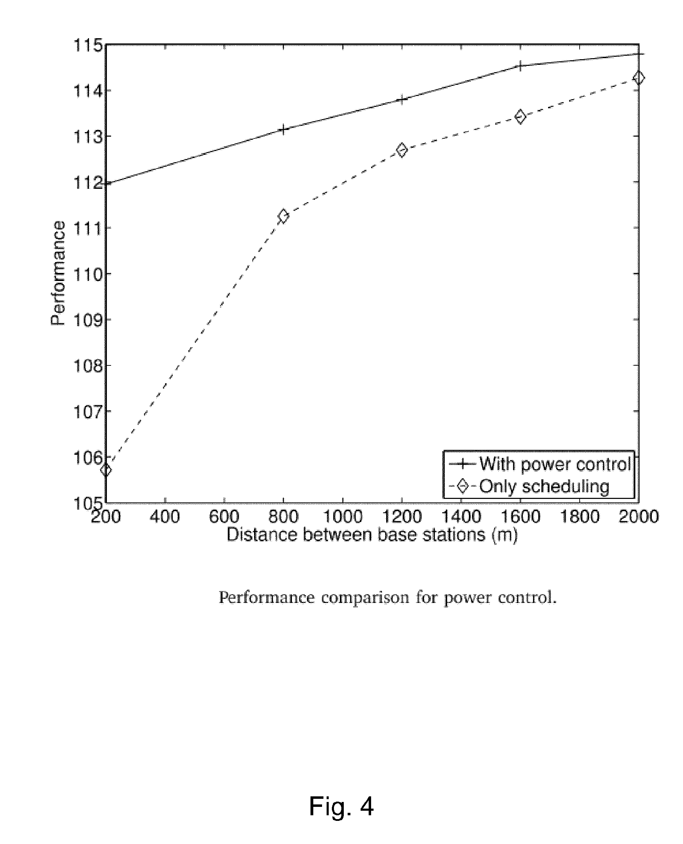

Next, we consider a system with two macro base stations. Each of these base stations has two clients associated with it, and the distance between a client and its associated base station is 50m. We compare a policy that uses both our scheduling policy and power control algorithm against one that only uses our scheduling policy (of processor 110) and allocates equal power on all resource blocks. We consider the performance of the two policies by varying the distance between the two base stations. We also set the price of energy to be zero for this system. Simulation results are shown in Fig. 4. It is observed that when the two base stations are far apart, the two policies achieve similar performance. However, as the distance between the two base stations decreases, the performance of the policy without power control (of processor 120) degrades greatly, as it suffers much from the interference between the two base stations. On the other hand, by using embodiments of the power control algorithm (of processor 120), the two base stations start to operate in disjoint resource blocks as the distance between them decreases. Hence, the performance of the policy using power control does not suffer too much from interference.

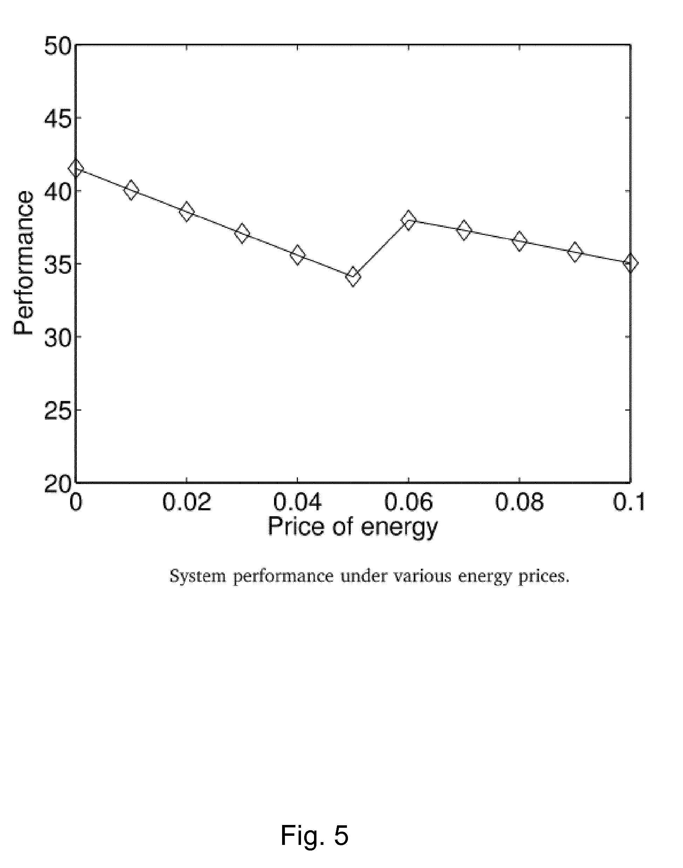

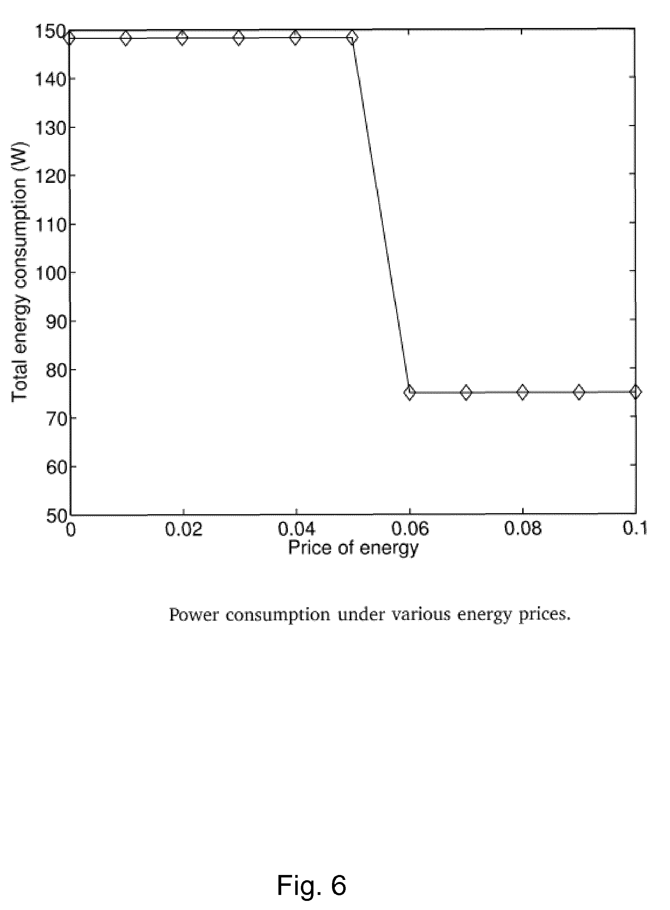

We now consider the Client Association Problem. We consider a system with two macro base stations that are separated by 500m. There are four clients uniformly distributed between them. We consider the performance of our proposed mechanism under various price of energy. Simulation results are shown in Fig. 5. We can see that when the price is small, the performance of the system degrades quickly with price. However, at a price of 0.06, the performance increases, and then degrades with price, but with a smaller slope. This is because, at a price of 0.06, our mechanism determines that it is better to shut down one of the base stations in order to save power and increase energy efficiency. Fig. 6 also shows that the total power consumption of this system decreases by about half at a price of 0.06.

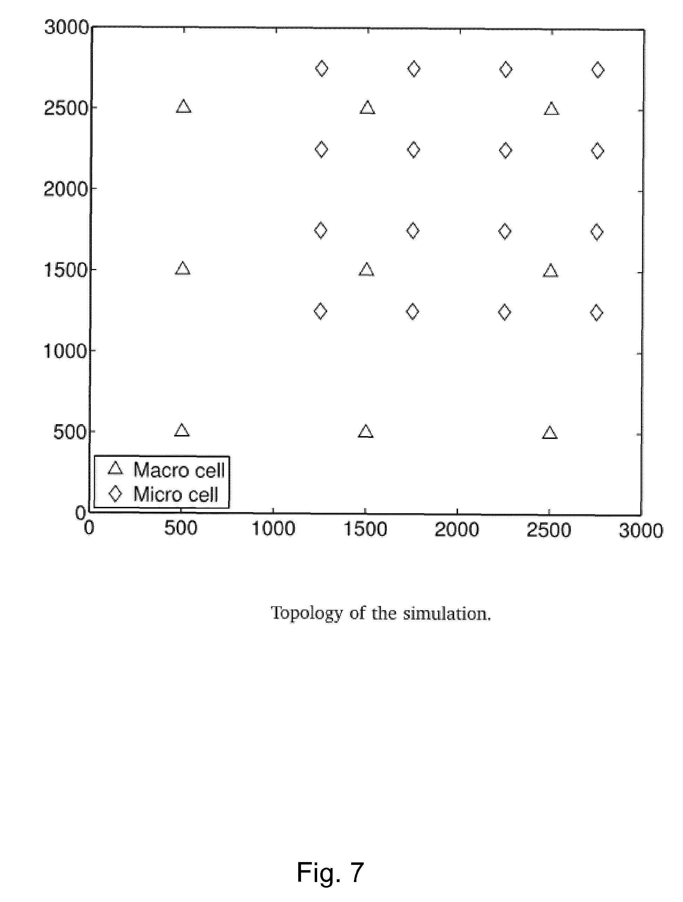

Finally, we present simulation results for a large scale system. The topology of this system is illustrated in Fig. 7. We consider a 3000m by 3000m area with 9 macro base stations forming a 3 by 3 grid. In addition, there are 16 micro base stations uniformly distributed in the area $[1000, 3000] \times [1000, 3000]$. We assume that there are 81 clients uniformly distributed in the area $[0, 3000] \times [0, 3000]$. Clients within the area of $[0, 1000] \times [0, 1000]$ have weights $w_i = 2$, while all other clients have weights $w_i = 1$.

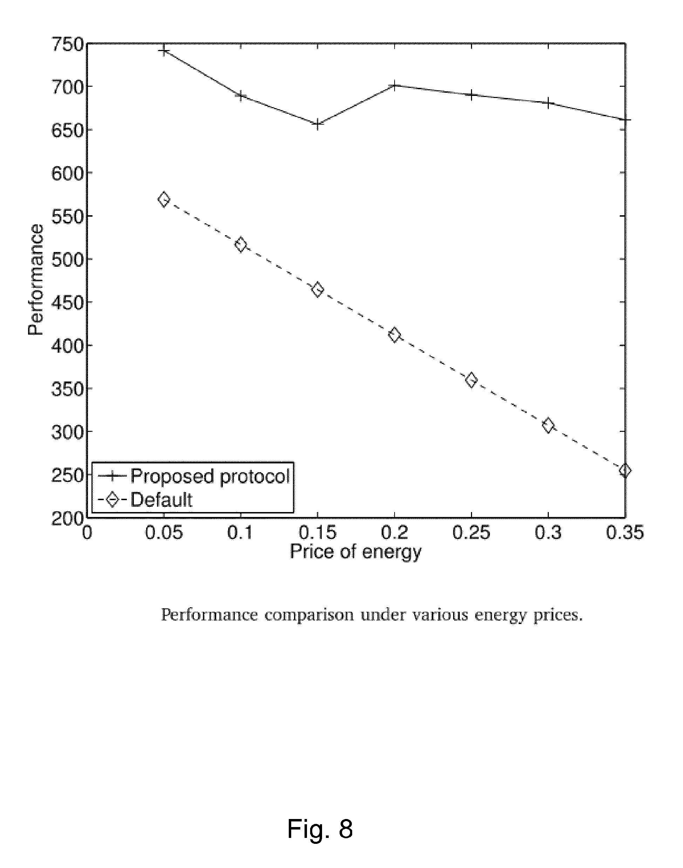

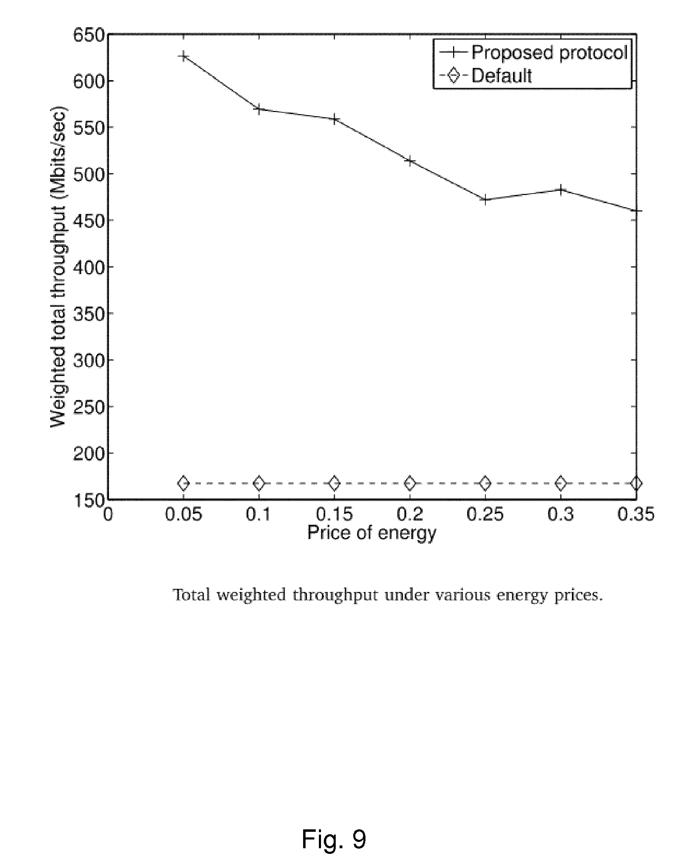

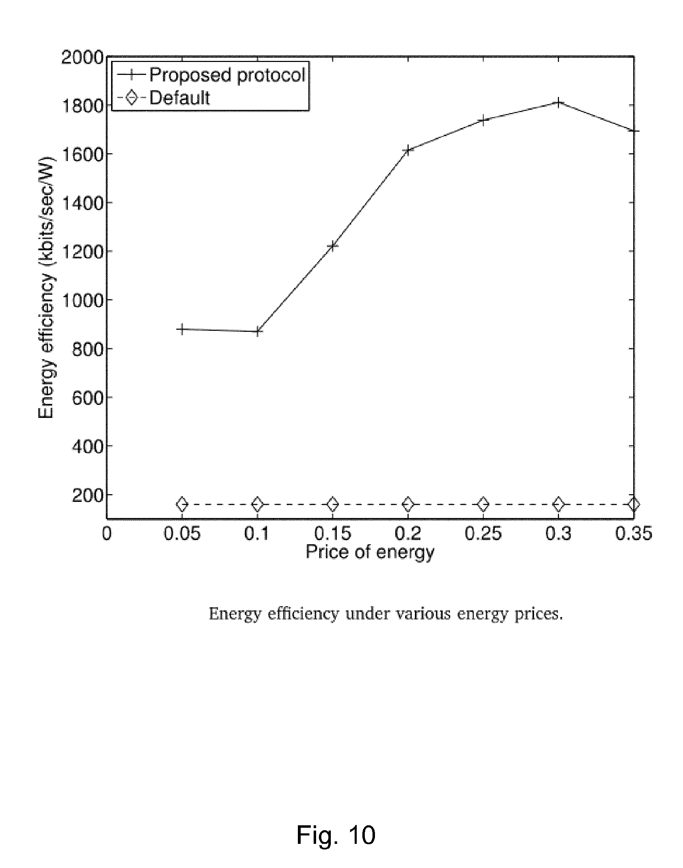

Fig. 8 shows the performance comparison between our proposed and the Default policy. Fig. 9 compares the weighted total throughput, $\Sigma_i w_i r_i$, and Fig. 10 compares the energy efficiency, defined as $(\Sigma_i w_i r_i)/$(total power consumption), for the two mechanisms. Embodiments may achieve much better performance than the Default policy under all energy prices. In particular, the weighted total throughput of embodiments is at least four times as large as that of the Default mechanisms. Further, as the price of energy increases, embodiments turn some base stations into sleep mode, which results in smaller weighted total throughput but improves energy efficiency.

To summarize, embodiments propose a distributed protocol for self-organizing LTE systems that considers both spectrum efficiency and energy efficiency. Embodiments may jointly optimize several important components, including resource block scheduling, power allocation, client association, and the decisions of being in active or sleep mode. Embodiments require only small computational and communicational overheads. Further, simulation results show that embodiments may achieve much better performance than existing policies.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Functional blocks denoted as "means for ..." (performing a certain function) shall be understood as functional blocks comprising circuitry that is adapted for performing a certain function, respectively. Hence, a "means for s.th." may as well be understood as a "means being adapted or suited for s.th.". A means being adapted for performing a certain function does, hence, not imply that such means necessarily is performing said function (at a given time instant).

Functions of various elements shown in the figures, including any functional blocks may be provided through the use of dedicated hardware, as e.g. a processor, as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and nonvolatile storage. Other hardware, conventional and/or custom, may also be included.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Furthermore, the following claims are hereby incorporated into the Detailed Description, where each claim may stand on its own as a separate embodiment. While each claim may stand on its own as a separate embodiment, it is to be noted that - although a dependent claim may refer in the claims to a specific combination with one or more other claims - other embodiments may also include a combination of the dependent claim with the subject matter of each other dependent claim. Such combinations are proposed herein unless it is stated that a specific combination is not intended. Furthermore, it is intended to include also features of a claim to any other independent claim even if this claim is not directly made dependent to the independent claim.

It is further to be noted that methods disclosed in the specification or in the claims may be implemented by a device having means for performing each of the respective steps of these methods.

Further, it is to be understood that the disclosure of multiple steps or functions disclosed in the specification or claims may not be construed as to be within the specific order. Therefore, the disclosure of multiple steps or functions will not limit these to a particular order unless such steps or functions are not interchangeable for technical reasons. Furthermore, in some embodiments a single step may include or may be broken into multiple sub steps. Such sub steps may be included and part of the disclosure of this single step unless explicitly excluded.

## Claims

1. An apparatus (100) for a wireless communication system, the wireless communication system comprising a plurality of base stations having associated thereto a plurality of users, wherein the wireless communication system uses a plurality of physical radio resource blocks for a communication between the plurality of base stations and the plurality of users, the apparatus comprising:

   a processor (105; 110) operable to assign at least one physical radio resource block from the plurality of physical radio resource blocks to a user associated to a base station from the plurality of base stations, such that the at least one physical radio resource block assigned to the user maximizes a relation between an instantaneous data throughput for said user on the assigned at least one physical radio resource block and an average data throughput of said user on the plurality of physical radio resource blocks.

2. The apparatus (100) according to claim 1, wherein the processor (105; 110) is operable to assign the at least one physical radio resource block based on information (125) indicative of instantaneous transmit powers which the plurality of base stations have currently assigned to the plurality of physical radio resource blocks and based on information (135) indicative of an instantaneous association of the plurality of users to the plurality of base stations.

3. The apparatus (100) according to claim 1, wherein the processor (105; 110) is operable to reassign the at least one physical radio resource block when an instantaneous mapping of transmit powers assigned to the plurality of physical radio resource blocks and/or an instantaneous association of the plurality of users to the plurality of base stations has changed, such than the a relation between the instantaneous data throughput and the average data throughput is not maximum for the instantaneous mapping of transmit powers and the instantaneous association of the plurality of users.

4. The apparatus (100) according to claim 1, wherein the processor (105; 110) is operable, for a time interval ($k$+1), to assign the at least one physical radio resource block $z$ to the user $i$ associated to the base station $m(i)$ maximizing the expression

$$w_i H_{i,m(i),z} / r_i[k],$$

wherein $z$ denotes the at least one assigned physical radio resource block, $i$ denotes the user, $m(i)$ denotes the base station to which user $i$ is associated to, $w_i$ denotes a priority indicator being indicative of an importance of serving the user $i$, $H_{i,m(i),z}$ denotes the data throughput on the at least one assigned physical radio resource block $z$ for said user $i$ assigned to base station $m(i)$, and wherein $r_i[k]$ denotes the average data throughput of said user $i$ in $k$ time intervals before time interval ($k$+1).

5. The apparatus (100) according to claim 1, wherein the processor (105; 110) is operable to determine the average data throughput $r_i[k]$ based on

$$r_i[k] = \sum_{z \in \mathbb{Z}} \phi_{i,m(i),z}[k] H_{i,m(i),z},$$

wherein $\phi_{i,m(i),z}[k]$ denotes a proportion of time that a physical radio resource block $z$ has been assigned to the user $i$ associated to the base station $m(i)$ in the $k$ time intervals before time interval ($k$+1), and $H_{i,m(i),z}$ denotes a predicted data throughput on the at least one assigned physical radio resource block $z$ for said user $i$ assigned to base station $m(i)$.

6. The apparatus (100) according to claim 1, wherein the processor (105; 110) is operable to determine the data throughput on the at least one assigned physical radio resource block $z$ for said user $i$ assigned to base station $m(i)$ based on

$$H_{i,m(i),z} := B \log\left(1 + \frac{G_{i,m(i),z} P_{m(i),z}}{N_{i,z} + \sum_{l \neq m(i)} G_{i,l,z} P_{l,z}}\right),$$

wherein $B$ denotes a bandwidth of a physical radio resource block, $G_{i,m(i),z}$ denotes a channel gain between the base station $m(i)$ and user $i$ on physical radio resource block $z$, $P_{m(i),z}$ denotes an amount of transmission power that the base station $m(i)$ assigns on physical radio resource block $z$, and $N_{i,z}$ denotes a thermal noise experienced by user $i$ on physical radio resource block $z$.

7. The apparatus (100) according to claim 5, wherein the processor (105; 110) is operable to determine the proportion of time $\phi_{i,m(i),z}[k+1]$ for the time interval ($k$+1) based on

$$\begin{cases} \phi_{i,m(i),z}[k+1] = \frac{k-1}{k} \phi_{i,m(i),z}[k] + \frac{1}{k} \\ \text{if client } i \text{ is scheduled for } z \text{ in } (k+1)\text{-th frame,} \\ \phi_{i,m(i),z}[k+1] = \frac{k-1}{k} \phi_{i,m(i),z}[k], \quad \text{otherwise.} \end{cases}$$

8. The apparatus (100) according to claim 1, wherein the processor (105; 120) is further operable to adjust the base station's transmit power assigned to the at least one physical radio resource block based on instantaneous scheduling information (115) being indicative of physical radio resource blocks currently assigned to the plurality of users during a transmission time interval and based on instantaneous association information (135) being indicative of a current association of the plurality of users to the plurality of base stations during the transmission time interval.

9. The apparatus (100) according to claim 8, wherein the processor (105; 120) is operable, based on known priority weights of users associated with the base station and based on a known association of the plurality of users to the plurality of base stations, to determine a transmit power for the users associated to the base station based on

$$\text{Max} \sum_m w^m \log \sum_z B \log\left(1 + \frac{G_{m,m,z} P_{m,z}}{N_{m,z} + \sum_{l \neq m} G_{m,l,z} P_{l,z}}\right)$$

wherein $w^m := \Sigma i:m(i)=m \ w_i$ denotes a sum priority weight of the users associated to the base station $m(i) \in M$, $B$ denotes a bandwidth of a physical radio resource block, $G_{m,m,z}$ denotes a channel gain for physical radio resource block $z$ between a user associated to the base station $m$ and said base station, $G_{m,l,z}$ denotes a channel gain for physical radio resource block $z$ between a base station $l \neq m$ and base station $m$, $P_{m,z}$ denotes a transmission power $P_{m,z}$ that the base station $m$ assigned to the physical radio resource block $z$, and wherein $N_{m,z}$ denotes a noise value for all users associated with base station $m$ on physical radio resource block $z$.

10. The apparatus (100) according to claim 8, wherein the processor (105; 120) is operable to update the base station's transmit power for a physical radio resource block $z$ based on

$$\frac{\partial U(P)}{\partial P_{m,z}},$$

wherein

$$U(P) := \sum_{m \in M} w^m \log\left[\sum_{z \in Z} B \log(1 + \text{SINR}_{m,z}(P))\right],$$

wherein $w^m := \Sigma i:m(i)=m w_i$ denotes a sum priority weight of the users associated to the base station $m$, $B$ denotes a bandwidth of a physical radio resource block $z$, wherein

$$\text{SINR}_{m,z}(P) := \frac{G_{m,m,z} P_{m,z}}{N_{m,z} + \sum_{l \neq m} G_{m,l,z} P_{l,z}},$$

wherein $G_{m,m,z}$ denotes a channel gain for physical radio resource block $z$ between a user associated to base station $m$ and said base station, $G_{m,l,z}$ denotes a channel gain for physical radio resource block $z$ between a base station $l \neq m$ and base station $m$ on physical radio resource block $z$, $P_{m,z}$ denotes a transmission power $P_{m,z}$ that the base station $m$ assigns to a physical radio resource block $z$, $P_{m,z}$ denotes a transmission power $P_{m,z}$ that a base station $l \neq m$ assigns to a physical radio resource block $z$, and wherein $N_{m,z}$ denotes a noise value for all users associated with base station $m$ on physical radio resource block $z$.

11. The apparatus (100) according to claim 10, wherein the processor (105; 120) is operable to update the base station's transmit power based on

$$\begin{cases} [P_{m,(f,q)} + \alpha \frac{\partial U(P)}{\partial P_{m,(f,q)}}]^+ \\ \qquad \text{if } \sum_e [P_{m,(e,q)} + \alpha \frac{\partial U(P)}{\partial P_{m,(e,q)}}]^+ \leq W, \\ W \frac{[P_{m,(f,q)} + \alpha \frac{\partial U(P)}{\partial P_{m,(f,q)}}]^+}{\sum_e [P_{m,(e,q)} + \alpha \frac{\partial U(P)}{\partial P_{m,(e,q)}}]^+}, \quad \text{otherwise,} \end{cases},$$

wherein $x^+ := \max\{x,0\}$, and $\alpha = \text{const}$.

12. The apparatus (100) according to claim 1, wherein the processor (105; 130) is further operable, for each of the plurality of base stations, based on instantaneous scheduling information (115) being indicative of physical radio resource blocks currently assigned to the plurality of users during a transmission time interval and based on instantaneous transmit power information (125) being indicative of current transmit powers which the plurality of base stations have assigned to the plurality of physical radio resource blocks during the transmission time interval, to determine information on a potential data throughput the user in case said user was associated with the respective base station, and operable to associate the user to a base station such that the potential data throughput of said user is maximized.

13. The apparatus (100) according to claim 12, wherein the processor (105; 130) is operable to access the processor (110) of claim 1 for simulating, for a potential association of the user to each of the plurality of base stations, an assignment of at least one physical radio resource block to the user, to obtain a proportion of time that the at least one physical radio resource block is assigned to the user, and/or to determine, for a potential association of the user to each of the plurality of base stations, an estimate for a Signal-to-Interference-plus-Noise Ratio (SINR) experienced by said user on each physical radio resource block, to obtain an estimate for a data throughput corresponding to each physical radio resource block for said user assigned to the respective base station.

14. A method for a wireless communication system, the wireless communication system comprising a plurality of base stations having associated thereto a plurality of users, wherein the wireless communication system uses a plurality of physical radio resource blocks for a communication between the plurality of base stations and the plurality of users, the method comprising:

assigning at least one physical radio resource block from the plurality of physical radio resource blocks to a user associated to a base station from the plurality of base stations, such that the at least one physical radio resource block assigned to the user maximizes a relation between an instantaneous data throughput for said user on the assigned at least one physical radio resource block and an average data throughput of said user on the plurality of physical radio resource blocks.

15. A computer program having a program code for performing the method of claims 14, when the computer program is executed on a programmable hardware device.

**Amended claims in accordance with Rule 137(2) EPC.**

1. An apparatus (100) for a wireless communication system, the wireless communication system comprising a plurality of base stations having associated thereto a plurality of users, wherein the wireless communication system uses a plurality of physical radio resource blocks for a communication between the plurality of base stations and the plurality of users, the apparatus comprising:

a processor (105; 110) operable to assign at least one physical radio resource block from the plurality of physical radio resource blocks to a user associated to a base station from the plurality of base stations, such that the at least one physical radio resource block assigned to the user maximizes a relation between an instantaneous data throughput for said user on the assigned at least one physical radio resource block and an average data throughput of said user on the plurality of physical radio-resource blocks, wherein the processor (105; 110) is operable to assign the at least one physical radio resource block based on information (125) indicative of instantaneous transmit powers which the plurality of base stations have currently assigned to the plurality of physical radio resource blocks and based on information (135) indicative of an instantaneous association of the plurality of users to the plurality of base stations.

**2.** The apparatus (100) according to claim 1, wherein the processor (105; 110) is operable to reassign the at least one physical radio resource block when an instantaneous mapping of transmit powers assigned to the plurality of physical radio resource blocks and/or an instantaneous association of the plurality of users to the plurality of base stations has changed such that a relation between the instantaneous data throughput and the average data throughput is not maximum for the instantaneous mapping of transmit powers and the instantaneous association of the plurality of users.

**3.** The apparatus (100) according to claim 1, wherein the processor (105; 110) is operable, for a time interval $(k+1)$, to assign the at least one physical radio resource block z to the user $i$ associated to the base station $m(i)$ maximizing the expression

$$w_i H_{i,m(i),z}/r_i[k],$$

wherein z denotes the at least one assigned physical radio resource block, $i$ denotes the user, $m(i)$ denotes the base station to which user $i$ is associated to, $w_i$ denotes a priority indicator being indicative of an importance of serving the user $i$, $H_{i,m(i),z}$ denotes the data throughput on the at least one assigned physical radio resource block z for said user $i$ assigned to base station $m(i)$, and wherein $r_i[k]$ denotes the average data throughput of said user $i$ in $k$ time intervals before time interval $(k+1)$.

**4.** The apparatus (100) according to claim 1, wherein the processor (105; 110) is operable to determine the average data throughput $r_i[k]$ based on

$$r_i[k] = \sum_{z\in\mathbb{Z}} \phi_{i,m(i),z}[k] H_{i,m(i),z},$$

wherein $\phi_{i,m(i),z}[k]$ denotes a proportion of time that a physical radio resource block z has been assigned to the user $i$ associated to the base station $m(i)$ in the k time intervals before time interval $(k+1)$, and $H_{i,m(i),z}$ denotes a predicted data throughput on the at least one assigned physical radio resource block z for said user $i$ assigned to base station $m(i)$.

**5.** The apparatus (100) according to claim 1, wherein the processor (105; 110) is operable to determine the data throughput on the at least one assigned physical radio resource block z for said user $i$ assigned to base station $m(i)$ based on

$$H_{i,m(i),z} := B\log\Big(1 + \frac{G_{i,m(i),z}P_{m(i),z}}{N_{i,z}+\sum_{l\neq m(i)} G_{i,l,z}P_{l,z}}\Big),$$

wherein $B$ denotes a bandwidth of a physical radio resource block, $G_{i,m(i),z}$ denotes a channel gain between the base station $m(i)$ and user $i$ on physical radio resource block z, $P_{m(i),z}$ denotes an amount of transmission power that the base station $m(i)$ assigns on physical radio resource block z, and $N_{i,z}$ denotes a thermal noise experienced by user $i$ on physical radio resource block z.

**6.** The apparatus (100) according to claim 4, wherein the processor (105; 110) is operable to determine the proportion of time $\phi_{i,m(i),z}[k+1]$ for the time interval $(k+1)$ based on

$$\begin{cases} \phi_{i,m(i),z}[k+1] = \frac{k-1}{k}\phi_{i,m(i),z}[k] + \frac{1}{k} \\ \quad \text{if client } i \text{ is scheduled for } z \text{ in } (k+1)\text{-th frame,} \\ \phi_{i,m(i),z}[k+1] = \frac{k-1}{k}\phi_{i,m(i),z}[k], \quad \text{otherwise.} \end{cases}$$

**7.** The apparatus (100) according to claim 1, wherein the processor (105; 120) is further operable to adjust the base station's transmit power assigned to the at least one physical radio resource block based on instantaneous scheduling information (115) being indicative of physical radio resource blocks currently assigned to the plurality of users during a transmission time interval and based on instantaneous association information (135) being indicative of a current association of the plurality of users to the plurality of base stations during the transmission time interval.

**8.** The apparatus (100) according to claim 7, wherein the processor (105; 120) is operable, based on known priority weights of users associated with the base station and based on a known association of the plurality of users to the plurality of base stations, to determine a transmit power for the users associated to the base station based on

$$\text{Max} \sum_m w^m \log \sum_z B \log\left(1 + \frac{G_{m,m,z}P_{m,z}}{N_{m,z} + \sum_{l \neq m} G_{m,l,z}P_{l,z}}\right)$$

wherein $w^m := \sum_{i:m(i)=m} w_i$ denotes a sum priority weight of the users associated to the base station $m(i) \in M$, $B$ denotes a bandwidth of a physical radio resource block, $G_{m,m,z}$ denotes a channel gain for physical radio resource block z between a user associated to the base station m and said base station, $G_{m,l,z}$ denotes a channel gain for physical radio resource block z between a base station $l \neq m$ and base station $m$, $P_{m,z}$ denotes a transmission power $P_{m,z}$ that the base station m assigned to the physical radio resource block z, and wherein $N_{m,z}$ denotes a noise value for all users associated with base station m on physical radio resource block z.

**9.** The apparatus (100) according to claim 7, wherein the processor (105; 120) is operable to update the base station's transmit power for a physical radio resource block z based on

$$\frac{\partial U(P)}{\partial P_{m,z}},$$

wherein

$$U(P) := \sum_{m \in \mathbb{M}} w^m \log\left[\sum_{z \in \mathbb{Z}} B \log(1 + \text{SINR}_{m,z}(P))\right],$$

wherein $w^m := \sum_{i:m(i)=m} \omega_i$ denotes a sum priority weight of the users associated to the base station $m$, $B$ denotes a bandwidth of a physical radio resource block z, wherein

$$\text{SINR}_{m,z}(P) := \frac{G_{m,m,z}P_{m,z}}{N_{m,z} + \sum_{l \neq m} G_{m,l,z}P_{l,z}},$$

wherein $G_{m,m,z}$ denotes a channel gain for physical radio resource block z between a user associated to base station $m$ and said base station, $G_{m,l,z}$ denotes a channel gain for physical radio resource block z between a base station

$l \neq m$ and base station $m$ on physical radio resource block $z$, $P_{m,z}$ denotes a transmission power $P_{m,z}$ that the base station $m$ assigns to a physical radio resource block $z$, $P_{m,z}$ denotes a transmission power $P_{m,z}$ that a base station $l \neq m$ assigns to a physical radio resource block $z$, and wherein $N_{m,z}$ denotes a noise value for all users associated with base station $m$ on physical radio resource block z.

**10.** The apparatus (100) according to claim 9, wherein the processor (105; 120) is operable to update the base station's transmit power based on

$$
\begin{cases}
\left[P_{m,(f,q)} + \alpha \frac{\partial U(P)}{\partial P_{m,(f,q)}}\right]^+ \\
\qquad \text{if } \sum_e \left[P_{m,(e,q)} + \alpha \frac{\partial U(P)}{\partial P_{m,(e,q)}}\right]^+ \leq W, \\
W \frac{\left[P_{m,(f,q)} + \alpha \frac{\partial U(P)}{\partial P_{m,(f,q)}}\right]^+}{\sum_e \left[P_{m,(e,q)} + \alpha \frac{\partial U(P)}{\partial P_{m,(e,q)}}\right]^+}, \quad \text{otherwise,}
\end{cases}
$$

,

wherein $x^+ := \max \{x,0\}$, and $\alpha = $ const.

**11.** The apparatus (100) according to claim 1, wherein the processor (105; 130) is further operable, for each of the plurality of base stations, based on instantaneous scheduling information (115) being indicative of physical radio resource blocks currently assigned to the plurality of users during a transmission time interval and based on instantaneous transmit power information (125) being indicative of current transmit powers which the plurality of base stations have assigned to the plurality of physical radio resource blocks during the transmission time interval, to determine information on a potential data throughput for the user in case said user was associated with the respective base station, and operable to associate the user to a base station such that the potential data throughput of said user is maximized.

**12.** The apparatus (100) according to claim 11, wherein the processor (105; 130) is operable to access the processor (110) of claim 1 for simulating, for a potential association of the user to each of the plurality of base stations, an assignment of at least one physical radio resource block to the user, to obtain a proportion of time that the at least one physical radio resource block is assigned to the user, and/or to determine, for a potential association of the user to each of the plurality of base stations, an estimate for a Signal-to-Interference-plus-Noise Ratio (SINR) experienced by said user on each physical radio resource block, to obtain an estimate for a data throughput corresponding to each physical radio resource block for said user assigned to the respective base station.

**13.** The apparatus (100) according to claim 1, wherein the processor is operable to

a) iteratively perform scheduling by assigning the plurality of physical radio resource blocks to the plurality of users based on instantaneous transmit power control information (125) provided by a last iteration of step b), indicative of instantaneous transmit powers which the plurality of base stations have currently assigned to the plurality of physical radio resource blocks, and based on instantaneous user assignment information (135) provided by a last iteration of step c), indicative of an instantaneous association of the plurality of users to the plurality of base stations,
b) iteratively perform transmit power control by assigning transmit powers to the plurality of physical radio resource blocks based on instantaneous scheduling information (115) provided by a last iteration of step a), indicative of instantaneous assignment of the plurality of physical radio resource blocks to the plurality of users, and based on the instantaneous user assignment information (135), and
c) iteratively perform user assignment by assigning the plurality of users to the plurality of base stations based on the instantaneous transmit power control information (125) provided by the last iteration of step b) and based on the instantaneous scheduling information (115) provided by the last iteration of step a).

**14.** A method for a wireless communication system, the wireless communication system comprising a plurality of base stations having associated thereto a plurality of users, wherein the wireless communication system uses a plurality of physical radio resource blocks for a communication between the plurality of base stations and the plurality of users, the method comprising:

assigning at least one physical radio resource block from the plurality of physical radio resource blocks to a user associated to a base station from the plurality of base stations, such that the at least one physical radio resource block assigned to the user maximizes a relation between an instantaneous data throughput for said user on the assigned at least one physical radio resource block and an average data throughput of said user on the plurality of physical radio resource blocks,

wherein the at least one physical radio resource block is assigned based on information (125) indicative of instantaneous transmit powers which the plurality of base stations have currently assigned to the plurality of physical radio resource blocks and based on information (135) indicative of an instantaneous association of the plurality of users to the plurality of base stations.

**15.** A computer program having a program code for performing the method of claims 14, when the computer program is executed on a programmable hardware device.

Fig. 1

---

**Algorithm 1** Approximate Estimator

---

1: Sort all resource blocks such that $\frac{\overline{H}_{m,1}}{H_{i,m,1}} \leq \frac{\overline{H}_{m,2}}{H_{i,m,2}} \leq \frac{\overline{H}_{m,3}}{H_{i,m,3}} \leq \dots$

2: $\hat{\phi}_{i,m,z} \leftarrow 0, \forall z \in \mathbb{Z}$

3: $\hat{r}_{i,m} \leftarrow 0, \forall i \in \mathbb{I}$

4: $\overline{r}_m \leftarrow \sum_{z \in \mathbb{Z}} \overline{H}_{m,z}$

5: **for** $z = 1 \rightarrow |\mathbb{Z}|$ **do**

6:    **if** $\frac{w_i H_{i,m,z}}{\hat{r}_{i,m} + H_{i,m,z}} > \frac{w^m_{-i} \overline{H}_{m,z}}{\overline{r}_m - \overline{H}_{m,z}}$ **then**

7:       $\hat{\phi}_{i,m,z} \leftarrow 1$

8:       $\hat{r}_{i,m} \leftarrow \hat{r}_{i,m} + H_{i,m,z}$

9:       $\overline{r}_m \leftarrow \overline{r}_m - \overline{H}_{m,z}$

10:   **else if** $\frac{w_i H_{i,m,z}}{\hat{r}_{i,m}} < \frac{w^m_{-i} \overline{H}_{m,z}}{\overline{r}_m}$ **then**

11:      Break

12:   **else**

13:      $\hat{\phi}_{i,m,z} \leftarrow \frac{\overline{r}_m w_i H_{i,m,z} - \hat{r}_{i,m} w^m_{-i} \overline{H}_{m,z}}{(w^m_{-i} + w_i) H_{i,m,z} \overline{H}_{m,z}}$

14:      $\hat{r}_{i,m} \leftarrow \hat{r}_{i,m} + \hat{\phi}_{i,m,z} H_{i,m,z}$

15:      $\overline{r}_m \leftarrow \overline{r}_m - \hat{\phi}_{i,m,z} \overline{H}_{m,z}$

16:      Break

17: **return** $\hat{r}_{i,m}$

---

## Fig. 2a

---

**Algorithm 2** Wakeup Estimator

---

1: Sort all clients that report to $m_1$ such that $\frac{\hat{r}_{1,m_1}}{r_1}w_1 \geq \frac{\hat{r}_{2,m_1}}{r_2}w_2 \geq \cdots \geq \frac{\hat{r}_{j,m_1}}{r_j}w_j$

2: $S \leftarrow \text{NULL}$

3: $\hat{w}^{m_1} \leftarrow 0$

4: **for** $i = 1 \rightarrow j$ **do**

5:     **if** $\frac{\hat{r}_{i,m_1}}{r_i}w_i > \hat{w}^{m_1} + w_i$ **then**

6:         $S \leftarrow S \cup \{i\}$

7:         $\hat{w}^{m_1} \leftarrow \hat{w}^{m_1} + w_i$

8: **return** $S, \hat{w}^{m_1}$

---

Fig. 2b

Performance comparison for scheduling.

Fig. 3

Performance comparison for power control.

Fig. 4

System performance under various energy prices.

Fig. 5

Power consumption under various energy prices.

Fig. 6

Topology of the simulation.

# Fig. 7

Performance comparison under various energy prices.

Fig. 8

Total weighted throughput under various energy prices.

Fig. 9

Energy efficiency under various energy prices.

Fig. 10

Europäisches
Patentamt

European
Patent Office

Office européen
des brevets

# EUROPEAN SEARCH REPORT

Application Number

EP 12 30 5658

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Mika Rinne: "CONVERGENCE OF PACKET COMMUNICATIONS OVER THE EVOLVED MOBILE NETWORKS; SIGNAL PROCESSING AND PROTOCOL PERFORMANCE", <br><br>, <br>26 March 2010 (2010-03-26), XP55011744, Retrieved from the Internet: URL:http://lib.tkk.fi/Diss/2010/isbn9789526030685/isbn9789526030685.pdf [retrieved on 2011-11-10] | 1,14,15 | INV. H04W72/04 |
| Y | * 3.4.2 * <br>* 6.4.3 <br>fig. 6.13 * <br>* 6.5.1 * <br>* 6.5.5.2 * <br>* 6.5.6.3 * <br>* 6.5.7.3 * <br>* figs 6.20, 6.21 * <br>* 8.1.1 <br>fig. 8.3 * <br>* 8.1.2 * <br>* 8.2 * <br>* 8.3 * <br>* 8.3.2 <br>equations 8.4, 8.5 * <br>----- | 2-13 | |
| Y | ERIK DAHLMAN ET AL: "3G evolution : HSPA and LTE for Mobile Broadband", 20070101, no. 1, 1 January 2007 (2007-01-01), page 485, XP040425740, <br>* 7.2 * <br>* 7.2.1 * <br>* 3.1 <br>equation 3.2 * <br>----- <br>-/-- | 2-13 | TECHNICAL FIELDS SEARCHED (IPC) <br><br>H04W |

The present search report has been drawn up for all claims

| Place of search | Date of completion of the search | Examiner |
|---|---|---|
| Munich | 10 October 2012 | Mele, Marco |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**EUROPEAN SEARCH REPORT**

Application Number

EP 12 30 5658

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2008/137537 A1 (AL-MANTHARI BADER [CA] ET AL) 12 June 2008 (2008-06-12) | 1,14,15 | |
| A | * paragraphs [0037] - [0040] * <br> * paragraphs [0069] - [0070] * <br> * paragraphs [0086] - [0089] * <br> ----- | 2-13 | |
| X | US 2003/223429 A1 (BI QI [US] ET AL) 4 December 2003 (2003-12-04) | 1,14,15 | |
| A | * paragraphs [0008] - [0018] * <br> * paragraphs [0028], [0029] * <br> * paragraph [0067] * <br> ----- | 2-13 | |
| X | US 2012/026910 A1 (KO JAE-YUN [KR] ET AL) 2 February 2012 (2012-02-02) | 1,14,15 | |
| A | * paragraphs [0022] - [0028] * <br> * paragraphs [0030] - [0038] * <br> ----- | 2-13 | |

TECHNICAL FIELDS
SEARCHED    (IPC)

The present search report has been drawn up for all claims

| Place of search | Date of completion of the search | Examiner |
|---|---|---|
| Munich | 10 October 2012 | Mele, Marco |

**EP 2 672 773 A1**

## ANNEX TO THE EUROPEAN SEARCH REPORT
## ON EUROPEAN PATENT APPLICATION NO.

EP 12 30 5658

This annex lists the patent family members relating to the patent documents cited in the above-mentioned European search report.
The members are as contained in the European Patent Office EDP file on
The European Patent Office is in no way liable for these particulars which are merely given for the purpose of information.

10-10-2012

| Patent document cited in search report | Publication date | Patent family member(s) | Publication date |
|---|---|---|---|
| US 2008137537 A1 | 12-06-2008 | NONE | |
| US 2003223429 A1 | 04-12-2003 | DE 60301035 D1 | 25-08-2005 |
| | | DE 60301035 T2 | 20-04-2006 |
| | | EP 1370035 A1 | 10-12-2003 |
| | | JP 4313093 B2 | 12-08-2009 |
| | | JP 2004040786 A | 05-02-2004 |
| | | US 2003223429 A1 | 04-12-2003 |
| US 2012026910 A1 | 02-02-2012 | KR 20120012618 A | 10-02-2012 |
| | | US 2012026910 A1 | 02-02-2012 |

For more details about this annex : see Official Journal of the European Patent Office, No. 12/82

39